# EUROPEAN PATENT SPECIFICATION

(11) **EP 2 780 108 B1**
(45) Date of publication and mention of the grant of the patent: **30.12.2020**
(21) Application number: 12849280.8
(22) Date of filing: 16.11.2012
(51) Int. Cl.: B01J 21/06, C01G 23/047, B01D 53/56, B01J 35/00, B01J 37/04, B01J 37/03, B01J 37/08

(54) **METHOD FOR PREPARING A NEUTRAL, STABLE AND TRANSPARENT PHOTOCATALYTIC TITANIUM DIOXIDE SOL**
VERFAHREN ZUR HERSTELLUNG EINES NEUTRALEN, STABILEN UND TRANSPARANTEN PHOTOKATALYTISCHEN TITANDIOXIDSOLES
PROCÉDÉ DE PRÉPARATION D'UN SOL DE DIOXYDE DE TITANE PHOTOCATALYTIQUE, NEUTRE, STABLE ET TRANSPARENT

(30) Priority: 16.11.2011 US 201161560669 P
(43) Date of publication of application: 24.09.2014
(73) Proprietor: Tronox LLC, Oklahoma City, OK 73134 (US)
(72) Inventor: KERROD, Julie, Elizabeth, Ulceby Lincolnshire DN39 6RX (GB); WAGSTAFF, Anthony, Roy, Scunthorpe Lincolnshire DN15 8TG (GB)
(74) Representative: Carpmaels & Ransford LLP
(86) International application number: PCT/US2012/065616
(87) International publication number: WO 2013/074984

(56) References cited:
- JP-A- 2002 179 949
- JP-A- 2010 148 999
- US-A- 5 049 309
- US-A- 5 403 513
- US-A1- 2006 228 476
- US-A1- 2006 228 476
- US-A1- 2007 195 259
- US-A1- 2008 081 758
- US-A1- 2009 209 665
- US-B1- 6 569 920
- US-B2- 7 605 186
- US-B2- 7 763 565

## Description

### 1. TECHNICAL FIELD

The presently disclosed and claimed inventive process(es), procedure(s), method(s), product(s), result(s) and/or concept(s) (collectively hereinafter referenced to as the "presently disclosed and claimed inventive concept(s)") generally relates to compositions imparting a photocatalytic coating on a surface. More specifically, the presently disclosed and claimed inventive concept(s) relates to sols of titanium dioxide nanoparticles that are useful for providing transparent photocatalytic coatings on a substrate which are depolluting and/or self-cleaning and may also have, in certain embodiments, anti-bacterial properties.

### 2. BACKGROUND

The photocatalytic properties of the semiconducting titanium dioxide material result from the promotion of electrons from the valence band to the conduction band under the influence of ultraviolet (UV) and near-UV radiation. The reactive electron-hole pairs that are created migrate to the surface of the titanium dioxide particles where the holes oxidize adsorbed water to produce reactive hydroxyl radicals and the electrons reduce adsorbed oxygen to produce superoxide radicals, both of which can degrade NOₓ and volatile organic compounds (VOCs) in the air. In view of these properties, photocatalytic titanium dioxide has been employed in coatings (both encased and unencased) and the like to remove pollutants from the air. Such coatings may also have the advantage of being self-cleaning since soil (grease, mildew, mold, algae, bacteria, etc.) is also oxidized on the surface.

In many applications, it is desirable for the titanium dioxide coating to be transparent in order to maintain the original appearance of the substrate (e.g., ceramic tile, paving block, brick, stone, marble siding surgical instruments used during medical procedures, solar cells, woven and non-woven fabrics of natural or synthetic fibers, etc.) or its original transparency (e.g., window glass, car windshield, surgical instruments used for viewing etc.). Titanium dioxide colloidal sols have proven to be useful precursor materials for forming such transparent and reactive coatings.

A stable alkaline titanium dioxide sol can be established at a pH above 11.30. The sol can be used for forming coatings that can be applied to buildings, concrete surfaces and roadways. However, the sol often at times has a strong and irritating pungent "ammonium type" smell and can be flammable under certain conditions. Thus, it is difficult to use such a sol without incurring the expense and difficulty of putting on personal protective equipment and the expense of employing extraction technology for removing residual amounts of sol from areas (such as ground soil) adjacent the substrate to be treated. In addition, the substrates may adversely react with the high pH peptizing agents that exist in the sol.

It is desirable to neutralize the alkaline titanium dioxide sol so that the sol will become virtually odorless and non-flammable-thereby overcoming many of the above-noted deficiencies, and allowing such a sol to be applied as an environmentally friendly photoactive water based surface coating. However, as the pH of the alkaline titanium dioxide sol is reduced the colloidal system typically agglomerates and becomes unstable and may even collapse. Such agglomeration is irreversible, that is, even if the solution is re-adjusted back to a high pH, colloidal stability is not returned. It is therefore desirable and long sought after in the art to provide stable neutral sols comprising photocatalytic titanium dioxide which are reactive, neutral and transparent. It is also desirable for such reactive, neutral and transparent photocatlytically active titanium dioxide sols to be stable over an extended period of time and also maintain photoactivity over a period of time and at a rate of activity that is above what is currently commercially available. It is well known to one of ordinary skill in the art that the creation of a stable, transparent and neutral TiO₂ sol is difficult (and has long been sought in the industry) because of the natural tendency of TiO₂ to flocculate between pH values of about 4 to about 10 due to the absence of any electrostatic stabilization occurring at neutral (or near neutral) pH. Furthermore, it is difficult to identify appropriate or effective molecules which can act as steric stabilizers in TiO₂ sols due to the extremely small particle size of the TiO₂. As effective steric stabilizers are generally larger molecules, one of ordinary skill in the art has found it difficult to identify appropriate steric stabilizers for use. It is also desirable for such reactive, neutral and transparent photocatalytically active titanium dioxide sols to exhibit anti-bacterial/anti-microbial activity. It is further desirable that the presently disclosed and claimed inventive concept(s) provide novel methods for preparing such reactive, neutral, stable and transparent sols which are readily implemented on a commercial scale.
US 2009/209665 A1 discloses stable, translucent or transparent titanium dioxide sols comprising amorphous titanium dioxide and an organic peptizing agent that are said to be useful in particulate binding applications. Also provided are methods for preparing the sols. US 2006/228476 A1 discloses a chemical vapor deposition process for laying down a tin or titanium oxide coating on a glass substrate through the use of an organic oxygen-containing compound and the corresponding metal tetrachloride.
US 2008/081758 A1 discloses a photocatalytic titanium oxide sol said to present antibacterial properties in a dark place, and, in particular, a photocatalytic titanium oxide sol which is said to be stable and causes no discoloration by light even though containing silver.
US 7,763,565 B2 discloses a method of preparing stable, transparent photocatalytic titanium dioxide sols is which involves thermal treatment of a suspension of amorphous titanium dioxide in the presence of certain alpha-hydroxy acids.

### SUMMARY OF THE INVENTION

In accordance with the foregoing objectives and others, it has been found that titanium dioxide sols, which are reactive, neutral, stable, transparent and which can be used safely and in an environmental friendly manner, may be formed by neutralizing alkaline titanium dioxide sols in the manner set forth herein.

The invention is defined by the claims. In one aspect of the presently claimed and disclosed inventive concept(s), a method for preparing a reactive, neutral, stable and transparent photocatalytic titanium dioxide sol is provided as defined by claim 1.

In another aspect of the presently claimed and disclosed inventive concept(s), a method for preparing a reactive, neutral, stable and transparent photocatalytic titanium dioxide sol is provided as defined by claim 6.

The peptized alkaline titanium dioxide sol is neutralized with phosphoric acid.

The resulting sol of titanium dioxide is reactive, stable and transparent over a range of pH of about 8.5 to about 9.5. The stable colloidal titanium dioxide sol may be in a form of particles of titanium dioxide having an average size of less than about 50 nm, with crystallites less than about 20 nm, less than about 10 nm or between about 1 nm and about 10 nm, with the majority of the crystallites being in an anatase form. In one alternate embodiment, the crystallites may have an average particle size between about 1 nm and of about 5 nm. In accordance with another embodiment, at least 90% of the crystallites being in an anatase form.

The titanium dioxide of the resulting sol is, in an embodiment, greater than 95% by weight in the anatase form. In other embodiments, the titanium dioxide particles of the resulting sol have an average particle size of less than about 10 nm or, alternatively less than 5 nm.

In a further embodiment, the resulting sol comprises titanium dioxide particles having an average particle size of less than about 50 nm, wherein the sol is transparent and is stable for at least 1 month when stored at room temperature. In other embodiments, the sol is stable when stored for at least 2, at least 3 or at least 4 months at room temperature. In yet another embodiment, the sol is stable when stored for at least 5 or at least 6 months at room temperature. In a further embodiment, the sol is stable when stored for at least 1 year or at least 2 years at room temperature. In a further embodiment the sol has a viscosity of less than about 100 centipoise after at least 4 weeks at room temperature.

Another aspect of the presently disclosed concept(s) provides a neutral, stable and transparent photocatalytic titanium dioxide sol formed from an alkaline titanium dioxide sol which is peptized and neutralized.

Another aspect of the presently disclosed concept(s) provides a structure or composition containing the reactive neutralized titanium dioxide sols for use on a substrate for NOx removal under UV exposure. The sols prepared by the presently disclosed inventive concept(s) have longer stability as compared to commercially available sols having similar size and transparency profiles.

Another aspect of the presently disclosed concept(s) provides an anti-bacterial composition comprising the neutral, stable and transparent photocatalytic titanium dioxide sol which, when placed in contact with bacteria, kills at least 80% of the bacteria.

These and other aspects of the presently claimed and disclosed inventive concept(s) will be better understood by reference to the following detailed description and accompanying figures.

### BRIEF DESCRIPTION OF THE FIGURES

FIG. 1 is a graph comparing NOₓ reduction of an alkaline titanium dioxide sol containing DEA treated with different percentages of phosphoric acids combined with acetic acids under UV radiation.
FIG. 2 is a graph comparing NOₓ reduction of an alkaline titanium dioxide sol containing TMAOH (tetramethylammonium hydroxide) treated with different percentages of phosphoric acids combined with acetic acids under UV radiation.
FIG. 3 is a graph comparing NOₓ reduction of an alkaline titanium dioxide sol containing DEA treated with different percentages of phosphoric acids combined with acetic acids under various light sources.
FIG. 4 is a graph comparing NOₓ reduction of an alkaline titanium dioxide sol containing TMAOH as a function of concentration of phosphoric acid combined with acetic acid under various light sources.
FIG. 5 is a graph comparing NOₓ reduction of an alkaline titanium dioxide sol containing DEA (diethyl amine) treated with various acids on concrete under UV radiation as a function of time.
FIG. 6 is a graph comparing NOₓ reduction of an alkaline titanium dioxide sol containing DEA treated with various acids on glass substrate under UV radiation as a function of time.
FIG. 7 is a graph comparing NOₓ reduction of an alkaline titanium dioxide sol containing DEA after neutralization with acetic & phosphoric acids on concrete at different initial NO exposures under UV radiation as a function of time.
FIG. 8 is a graph comparing the amounts of NO in the baseline with those measured at a concrete wall coated with a neutralized alkaline titanium dioxide sol containing DEA as a function of time in the area of Camden-London, England.
FIG. 9 is a graph comparing the amounts of NO₂ in the baseline with those measured at a concrete wall coated with a neutralized alkaline titanium dioxide sol containing DEA as a function of time in the area of Camden-London, England.
FIG. 10 is a graph comparing viscosity over time for alkaline titanium dioxide sols containing varying amounts of DEA.
FIG. 11 is a graph comparing viscosity over time for alkaline titanium dioxide sols containing varying amounts of DEA treated with either phosphoric acid or a phosphoric/acetic acid mixture.
FIG. 12 is a graph comparing viscosity for alkaline titanium dioxide sols containing varying amounts of DEA and washed with either demineralized water or mains water.
FIG. 13 is a graph comparing the amounts of NO in the baseline with those measured at a concrete wall coated with a neutralized alkaline titanium dioxide sol containing DEA, and with those measured at the concrete wall covered with wood, as a function of time in the area of Camden-London, England.
FIG. 14 is a graph comparing the amounts of NO₂ in the baseline with those measured at a concrete wall coated with a neutralized alkaline titanium dioxide sol containing DEA, and with those measured at the concrete wall covered with wood, as a function of time in the area of Camden-London, England.

### DETAILED DESCRIPTION

Before explaining at least one embodiment of the inventive concept(s) disclosed herein in detail, it is to be understood that the presently disclosed and claimed inventive concept(s), process(es), methodology(ies) and/or outcome(s) is not limited in its application to the details of construction and the arrangement of the components or steps or methodologies set forth in the following description or illustrated in the drawings. The presently disclosed and claimed inventive concept(s), process(es), methodology(ies) and/or outcome(s) disclosed herein is capable of other embodiments or of being practiced or carried out in various ways. Also, it is to be understood that the phraseology and terminology employed herein is for the purpose of description and should not be regarded as limiting the presently disclosed and claimed inventive concept(s), process(es), methodology(ies) and/or outcome(s) herein in any way.

All terms used herein are intended to have their ordinary meaning unless otherwise provided. The term "sol" refers to a colloidal suspension of particles. The term "NOₓ" refers to the species NO (nitrogen oxide) and NO₂ (nitrogen dioxide), either collectively or individually.

Where reference is made to "removal" of pollutants from the air, it will be understood to include complete or partial removal of pollutants from the air. Whether removal is "substantial" can be determined by the methods provided in the examples, where "substantial removal" refers to a reduction in the total concentration of a fixed amount of given pollutant by at least about 5%, preferably at least about 10%, and more preferably at least about 15%. Given the present disclosure (including the examples), one of ordinary skill in the art would appreciate that the sols of the presently claimed and disclosed inventive concept(s) provide exceptional NOx removal and/or degradation and, in one particular study, the sols of the presently claimed and disclosed inventive concept(s) provided 60% NO and 20% NO₂ removal under specific outdoor environmental conditions in London.

A method for preparing neutral, stable and transparent sols of colloidal photocatalytic titanium dioxide according to the presently disclosed and claimed inventive concept(s) is defined by claim 1. The resulting neutral, stable and transparent photocatalytic titanium dioxide sol can be mainly in an anatase form and can have an average particle size of less than about 50 nm. In one embodiment, the average particle size of the titanium dioxide is less than or equal to about 20 nm. One of ordinary skill in the art will appreciate that the resulting neutral, stable and transparent photocatalytic titanium dioxide sol will be amorphous in nature.

In one embodiment, the alkaline peptizing agent is a mono-, di- or trialkyl amine; mono-, di- or triarylamines; organic bases with two or more functional groups such as dialkanolamines and trialkanolamines and the like. The mono-, di- or trialkylamine peptizing agents may comprise linear, branched or cyclic alkyl groups. Suitable amines include, but are not limited to, mono-, di- or trimethyl amine; mono-, di- or triethylamine; mono-, di- or tripropylamine; mono-, di- or tributyl amine, sec-butylamine, isobutylamine, isopropylamine, isoamylamine, tert-amylamine, 2-methylbutylamine, 1-methylbutylamine and combinations of the like. In one embodiment the alkaline peptizing agent is diethyl amine.

Amines with cyclic alkyl groups include, but are not limited to cyclopropylamine, cyclobutylamine, cyclopentylamine, cyclohexylamine, cycloheptylamine and cyclooctylamine as well as their di- and tri-alkyl derivatives. Of course, amines with different alkyl groups such as diisopropylethylamine, ethylbutylamine, methylethylamine, and the like, may be used. Also contemplated are cyclic amines such as pyrrolidine, piperidine, morpholine, and the like, as well as their N-alkyl derivatives. Preferably, bulky mono-, di- or trialkyl amines such as tert-butylamine, triethylamine, propylamine, dipropylamine, diisopropylethylamine, and the like, are used as basic peptizing agents.

In another embodiment, the alkaline peptizing agent can be a quaternary ammonium hydroxide. The quaternary ammonium hydroxide may, in one embodiment, be selected from the group consisting of tetraalkylammonium hydroxide where the alkyl contains one of C₁ through C₁₀ atoms or combinations of C₁ through C₁₀ atoms. The quaternary ammonium hydroxide can be tetralmethylammonium hydroxide.

The step of neutralizing the peptized alkaline titanium dioxide sol is carried out by mixing an acid compound that is phosphoric acid with the peptized alkaline titanium dioxide sol.

The acid compound can, in one embodiment, be a first acid compound that is phosphoric acid and an optional second acid compound. The first acid compound can be a combination of phosphoric acid and an organic acid. The organic acid can, in one embodiment, be an aliphatic, aromatic hydroxycarboxylic acid or combinations thereof. The organic acid can be selected from the group consisting of oxalic acid, citric acid, tartaric acid, salicylic acid and combinations thereof, for example.

The second acid compound can be a mineral acid, an organic acid or combinations thereof. In one embodiment, the mineral acid is nitric acid. When an organic acid is used, it can be acetic acid. The percentage of the first acid compound can be varied from about 25 to about 100 parts by weight and the percentage of the second acid compound can be varied from about 0 to about 75 parts by weight and one of ordinary skill in the art would appreciate and be capable of adapting such parts by weight as necessary.

In a particular embodiment, the acid compound is added drop wise to the peptized alkaline titanium dioxide sol while stirring at room temperature. The stirring may be done continuously or intermittently as long as the functional requirement is met. The final pH value of the resulting neutralized sol is controlled so as to be within a range of about 8 to about 9.

In another aspect of the presently claimed and disclosed inventive concept(s), a method for preparing a neutral, stable and transparent photocatalytic titanium dioxide sol is provided as defined by claim 6.

The titanium containing compound may be any compound capable of forming a precipitate of titanium dioxide. In one embodiment, the titanium containing compound is an organotitanium compound. Suitable organotitanium compounds include, but are not limited to, titanium alkoxides of the general structure Ti(OR)₄ where each R is independently alkyl, aryl or heteroaryl; titanium acyl compounds such as titanyl acetylacetonate and the like. Preferred titanium alkoxides include titanium tetraisopropoxide, titanium tetra-n-propoxide, titanium tetraethoxide, titanium tetramethoxide, titanium tetra-n-butoxide and titanium tert-butoxide and the like. Mixed titanium alkoxides, where the R groups in Ti(OR)₄ may be different, are also contemplated as the titanium containing compound. Other suitable organic titanium compounds include titanium (IV) amine compounds such as tetrakis(dimethylamino)titanium, tetrakis(diethylamino)titanium and the like.

Titanium halides represented by the formula TiX₄, where X is chloro, bromo, iodo or fluoro, or mixtures thereof, may also be used as titanium containing compounds. The presently claimed and disclosed inventive concept(s) also contemplates the use of organotitanium halides such as chlorotitanium triisopropoxide (Ti(O-i-Pr)₃Cl) and the like as titanium containing compounds. Organotitanium di- and tri-halides are also contemplated. Although not being bound by theory, it is believed that when titanium halides are used as titanium containing compounds, the halides are typically first hydrolyzed in a controlled fashion to a less reactive species such as titanium oxyhalide (i.e. titanium oxychloride and the like). The resulting intermediate titanium species may then be further hydrolyzed to TiO₂ by adjusting the pH of the solution.

In another aspect of the presently claimed and disclosed inventive concept(s), the titanium containing compound may be a water-soluble titanium salt. Suitable titanium salts include, but are not limited to, titanium oxychloride, titanium sulfate, titanium oxynitrate and the like. Precipitation of TiO₂ from water-soluble salts may be affected by adjusting the pH of the solution to a pH where the water soluble titanium salt will hydrolyze and form TiO₂, which precipitates from solution. Typically, this is accomplished by raising the pH of the solution with addition of a base compound such as NaOH, for example, but not by way of limitation.

The solution of the titanium containing compound may be an aqueous solution or may comprise a suitable organic solvent added to water to achieve hydrolysis of the titanium containing compound. Mixtures of water and an organic solvent may also serve to control the rate of hydrolysis of the titanium containing compound and the precipitation of TiO₂. If organic solvents are used, the solvents will typically be miscible with water or will have sufficient solubility for water so that sufficient water will be available to hydrolyze the titanium containing compound to TiO₂. Suitable organic solvents include alcohols such as methanol, ethanol, isopropanol and the like; amides such as dimethylformamide and dimethylacetamide and the like; and sulfoxides such as dimethylsulfoxide. There is essentially no constraint on the concentration of the solution of the titanium containing compound, although it is preferably suitably concentrated such that the kinetics of the precipitation are optimized.

Precipitation may be affected by any suitable method, including without limitation, hydrolysis, pH adjustment, or solvent-shifting. The precipitation method employed will be determined largely by the selection of titanium containing compound. For example, hydrolysis is the preferred precipitation method where the titanium containing compound is a titanium alkoxide or titanium acetylacetonate. For titanium oxychlorides or titanium sulfates, which are water soluble, precipitation is best carried out by pH adjustment (e.g., raising the pH) or by adding a solvent in which the compound is essentially insoluble, such as acetone or higher alcohols ("solvent shifting"). By "essentially insoluble" is meant that the solubility of the titanium containing compound is sufficiently low in the solvent to permit titanium dioxide to precipitate from solution when contacted with the second solvent. By "higher" alcohols is meant C₅ alcohols or greater, including, without limitation, pentanol, hexanol, heptanol, octanol, for example.

In one embodiment, the titanium containing compound is mixed with an alcohol. As the titanium containing compound is hydrolyzed, it forms TiO₂ which precipitates as amorphous TiO₂ particles with an average particle size of less than about 50 nm. In another embodiment, the titanium containing compound is mixed with a chelating base to form a chelated titanium species and the mixture is then added to water to hydrolyze the titanium containing compound and precipitate amorphous TiO₂.

Any base known to those in the art that will increase the pH of the water solution of the water-soluble titanium salt may be used to precipitate TiO₂, including inorganic and organic bases. Suitable bases include, but are not limited to, amine bases including as ammonium hydroxide, mono-, di- or trialkylamines such as triethylamine, diisopropylethylamine and the like; cyclic amine bases such as N-ethylmorpholine, piperidine, pyrrolidine and the like; hydroxides or alkoxides of alkali metals or alkaline earth elements such as sodium, lithium, potassium hydroxide, magnesium hydroxide, calcium hydroxide; sodium, lithium or potassium alkoxides such as methoxide, ethoxide, butoxide, t-butoxide and the like; carbonate and bicarbonate bases such as sodium, lithium or potassium carbonate and bicarbonate and the like. It will be apparent to skilled persons that the type of base is not limited to the bases described above and that there are many other bases that may be used to adjust the pH of the solution of water-soluble titanium salt.

Alternatively, the TiO₂ may be precipitated from solution by changing the composition of the solvent so that the TiO₂ is no longer soluble. In this embodiment, a titanium containing compound which is in solution in a suitable solvent may be added to a second "anti-solvent" in which the precursor is not soluble. For example, this may be achieved by adding a titanium containing compound in a water-miscible organic solvent such as acetone or higher alcohols to water. Alternatively, the precipitation may be accomplished by adding a water-miscible organic solvent to an aqueous solution of the water soluble titanium salt to lower the solubility of TiO₂. The titanium precipitate formed may be used in the next step of the process, whether it is partially hydrolyzed or fully hydrolyzed to TiO₂.

In certain aspects of the invention, the controlled hydrolysis or controlled precipitation of the titanium containing compound is achieved by treating the titanium containing compound with a chelating agent, which forms stable chelate bonds with titanium in aqueous solution, prior to hydrolysis of the titanium containing compound and precipitation of TiO₂. Using the chelating agents, the rate of hydrolysis or precipitation of the titanium containing compound in water may be controlled, thereby controlling the particle size of the TiO₂ particles formed.

In the presently disclosed and claimed inventive concept(s), a neutral or base chelating agent can be used. Suitable neutral chelating agents include dicarbonyl compounds such as a diketone, a diester, a ketoester and the like. Diketone chelators include 2,4-pentanedione, 1,4-hexanedione, 1,3-pentanedione, 2,4-hexanedione, and dipivaloyl methane. Diester chelators include mono or di-alkyl esters of dicarboxylic acids. Suitable diesters include dialkyl malonates, such as dimethyl and diethylmalonates and the like. Ketoester chelators include, but are not limited to, alkyl acetoacetates such as methyl acetoacetate, ethyl acetoacetate, isopropyl acetoacetate, butyl acetoacetate and the like. Mixtures of two or more dicarbonyl chelators may also be used to prepare the inventive sols.

Base chelating agents include organic bases that comprise two or more functional groups that are able to chelate to the titanium atom. Suitable chelating agents include dialkanolamines and trialkanolamines such as diethanolamine, triethanolamine and the like. Other suitable chelating bases with two or more functional groups include ethylenediamine, diethylenetriamine, triethylenetetramine, 2,2'-bipyridine, 1,10-phenanthroline, ethylenediaminetetraacetic acid or -tetraacetate, ethylenediaminetriacetic acid or -triacetate, 2,2',2"-terpyridine, 1,4,7-triazacyclononane, tris(2-aminoethyl)amine, and the like.

Addition of a base chelating agent to the titanium containing compound results in a more stable species prior to precipitation, and can reduce the degree of hydrolysis thereby facilitating the peptization of the titanium particles in the next step. In one embodiment, the base used to treat the titanium containing compound is the same base used as an alkaline peptizing agent. The amount of chelating base added to the titanium containing compound is such that the molar ratio of base to titanium may be, in one embodiment, ≤ 0.5:1. In another embodiment, the molar ratio of base to titanium may be ≤ 0.3 or 0.2:1.

When a soluble titanium salt is used as a titanium containing compound and an organic base is used as an alkaline peptizing agent, a de-ionizing step may alternatively be used to reduce the concentration of ions present in the titanium containing compound prior to the precipitation step. Lowering the concentration of the ions in the solution facilitates the chelation of the titanium with chelating agents. Any method that will reduce the level of ions in the soluble titanium salt solution may be used, including treatment with an anion exchange resin, precipitation of insoluble salts, and the like.

In one embodiment, the titanium containing compound is treated with an anionic ion exchange resin to remove excess ions that may be in the solution of the titanium containing compound such as sulfate ions, chloride ions, and the like, depending on the nature of the soluble titanium salt. When the soluble titanium salt solution is treated with an ion exchange resin, the pH of the solution will typically increase over time and may result in the formation of a TiO₂ precipitate. Preferably, the treatment time of the soluble titanium salt with an anion exchange resin will be limited so that the pH of the solution is maintained at less than about 3 in order to prevent formation of a TiO₂ precipitate. More preferably, the deionization treatment will be limited so that the pH of the solution is maintained at less than about 2. Once the level of ions is reduced, the titanium salt solution is separated from the ion exchange resin and treated with a base that is capable of forming a chelating bond, as described above. The pH of the solution of the chelated titanium dioxide salt is then adjusted with a suitable base to form TiO₂ which precipitates from solution.

The precipitated TiO₂ may be collected by any suitable means including decanting, centrifugation and filtration. The isolated solid may optionally be washed with water to remove byproducts of the hydrolysis reaction and other impurities prior to the dispersion step in a liquid medium.

In one embodiment, the precipitated TiO₂, which is in an amorphous form, is generally collected by filtration and thoroughly washed with de-ionized water prior to redispersion. The washed, wet filter cake is then re-dispersed in a volume of de-ionized water with vigorous agitation (e.g., stirring with a deep vortex, shaking, etc.). The de-ionized water typically, although not always, comprise alkaline peptizing agents in solution before the dispersion is formed. Since the benefit of the alkaline peptizing agent is largely realized during the subsequent thermal treatment step, it is not strictly necessary that the alkaline peptizing agent be present in the aqueous solution before the precipitate is re-dispersed. Rather, the alkaline peptizing agent may also be added after the dispersion is formed, or may be added to the titanium containing compound before the precipitation is carried out or, it may be added during or throughout each or both steps. The amount of de-ionized water used will be such that the weight ratio of the initial titanium containing compound (e.g. titanium isopropoxide) to the total weight of the dispersion is from about 1:2 to about 1:10, from about 1:3 to about 1:6, and from about 1:4 to about 1:5.

The concentration of the TiO₂ in the dispersing liquid determines the initial concentration of the sol after peptization. The TiO₂ sols can be further diluted or concentrated, if desired, after the peptization step is complete. Typically, a TiO₂ dispersion of about 1% to about 30% of TiO₂ by weight in an aqueous solvent will be used for the peptization step. The aqueous solvent may be any solvent or solvent mixture that comprises water. For example, mixtures of water and a water-miscible solvent such as an alcohol may be used. More typically, the concentration of the dispersion is from about 2% to about 15% or from about 5% to about 15% by weight of the mixture. In one embodiment, the concentration is from about 8% to about 12% or from about 5% to about 10% by weight.

The precipitated TiO₂ is thereafter treated with an alkaline peptizing agent with agitation to form the TiO₂ sols of the presently claimed and disclosed inventive concept(s). The dispersed TiO₂ may be treated with the alkaline peptizing agent at room temperature or at an elevated temperature or range of elected temperatures with agitation until the dispersion forms a transparent or translucent mixture. A wide variety of alkaline peptizing agents may be used in the presently disclosed and claimed inventive concept(s). The alkaline peptizing agents used here with regard to this step are the same as those described previously.

The peptization is typically carried out at a temperature of from about 70°C to about 150°C (i.e., a thermal treatment) for a period of time from about 3 hours to about 3 days under continuous or intermittent agitation. It is not necessary to neutralize the solution prior to any thermal treatment. Therefore, in one embodiment, the dispersion comprising the alkaline peptizing agent is not subject to a neutralization step, such as by the addition of a basic solution, prior to or during the thermal treatment. It has also been found useful, in one embodiment, to perform the peptization in a sealed hydrothermal reactor due to the concomitant increase in pressure. Bomb-type hydrothermal reactors, such as those available from Parr Instruments (Illinois), have been found suitable for use in the hydrothermal reaction for example, but not by way of limitation. One or more bomb reactors may be placed in a roller oven or the like to provide the thermal conditions and to achieve agitation. The resulting alkaline titanium dioxide sol can be neutralized by boiling the sol, mixing hydrogen peroxide with the sol, or mixing an acid compound with the sol. All these neutralization methods are the same as those described previously.

In accordance with another embodiment of the invention, a neutral, stable and transparent photocatalytic titanium dioxide sol can be formed from an alkaline titanium dioxide sol which is peptized and neutralized. The alkaline titanium dioxide sol can be peptized with an alkaline peptizing agent as described above, thereby forming a peptized alkaline titanium dioxide sol which can be neutralized by an acid compound as described above, thereby forming the neutral, stable and transparent photocatalytic titanium dioxide sol.

The neutral, stable, transparent or translucent TiO₂ sols can contain from about 0.5% to about 40% of TiO₂ by weight in an aqueous solvent. More typically, the sols can contain from about 2% to about 20% or from about 2% to about 15% or between about 5% to about 20% or between about 5% to about 15% titanium dioxide by weight. In one embodiment, the sols can contain between about 8% to about 12% or about 5% to about 10% TiO₂ by weight of the mixture. In accordance with another embodiment, the neutral, stable, transparent or translucent TiO₂ sols can contain from about 20% to about 40% or between about 25% to about 40% or between about 30% to about 40% titanium dioxide by weight.

The neutral, stable, transparent or translucent TiO₂ sols can contain at least about 10% or at least 15% or at least 16% or at least 17% or at least 18% or from about 10% to about 20% or from about 12% to about 16% or at least 16% to about 18% alkaline peptizing agent based on the combined weight of the alkaline peptizing agent and the TiO₂.

When the alkaline peptizing agent is present in the neutral, stable, transparent or translucent TiO₂ sol(s) in an amount of at least about 7% based on the combined weight of the alkaline peptizing agent and the TiO₂, the resulting peptized alkaline titanium dioxide sol can be neutralized with an acid comprising phosphoric acid. Further, the neutral, stable, transparent or translucent TiO₂ sol(s) can contain from about 5 to about 20 or from about 30 to about 40 wt% titanium dioxide.

When the alkaline peptizing agent is present in the neutral, stable, transparent or translucent TiO₂sol(s) in an amount of at least about 18% based on the combined weight of the alkaline peptizing agent and the TiO₂, the resulting peptized alkaline titanium dioxide sol can be neutralized with a combination of phosphoric acid and acetic acid; wherein the weight ratio of the phosphoric acid to the acetic acid can be in the range of from about 0.8:1 to about 1.2:1 or from about 0.9 to about 1.1 or about 1:1. The phosphoric acid and the acetic acid can be substantially simultaneously added to the peptized alkaline titanium dioxide sol. Further, the neutral, stable, transparent or translucent TiO₂ sol(s) can contain from about 5 to about 20 or from about 30 to about 40 wt% titanium dioxide.

The peptized alkaline titanium dioxide sol or the neutral, stable and transparent photocatalytic titanium dioxide sol can also be washed with demineralized water such that the concentration of calcium and sodium ions is less than about 71 ppm and less than about 13 ppm, respectively, in the resulting washed material. The resulting filtrate conductivity can be equal to or less than 500 µS. The viscosity of the resulting washed peptized alkaline titanium dioxide sol or of the washed neutral, stable and transparent photocatalytic titanium dioxide sol can be less than about 100 centipoise after at least 4 weeks at room temperature.

The neutral, stable and transparent photocatalytic titanium dioxide sol(s) are reactive, stable and transparent over a range of pH of about 7 to about 9.5. The average particle size of the neutral, stable and transparent photocatalytic titanium dioxide sol(s) after neutralization will generally be less than about 50 nm although one of ordinary skill in the art will appreciate that some amount of the process may have a particle size > about 50 nm without effecting the presently claimed and disclosed inventive concept(s) outlined herein. More typically, the average particle size of the titanium dioxide particles will be less about 30 nm, 20 nm or 10 nm. In one embodiment, the crystallite size of the titanium dioxide sol will be less than about 5 nm. Reference herein to the size of titanium dioxide particles will be understood to mean the average particle size of the titanium dioxide particulates. Where the particle size is modified by the term "about," (and as the term is used elsewhere therein) it will be understood to embrace somewhat larger or smaller particles sizes than the indicated value to account for experimental errors inherent in the measurement and variability between different methodologies for measuring particle size (or temperature, pressure, pH or time, for example), as will be apparent to one skilled in the art. The diameters may be measured by standard particle size analysis techniques, for example, transmission electron microscopy (TEM, XRD) or by light scattering techniques (e.g., without limitation, dynamic light scattering, by Malvern Instruments Ltd., U.K.).

Alternatively, the particles may be characterized by surface area. Typically, the titanium dioxide used in the sols of the presently claimed and disclosed inventive concept(s) will have a surface area, as measured by any suitable method, including 5-point BET on a dried sample, of greater than about 20 m²/g. More typically, the photocatalytic titanium dioxide particles have surface areas of greater than about 50 m²/g or greater than about 70 m²/g. In one embodiment, the titanium dioxide particles have surface areas greater than about 100 m²/g. In another embodiment, the surface areas are greater than about 150 m²/g. In yet another embodiment, the titanium dioxide particles will have a surface area greater than about 200 m²/g, greater than about 250 m²/g, or greater than about 300 m²/g.

The sols prepared according to the presently claimed and disclosed inventive concept(s) may optionally include additional ingredients provided that the addition of such ingredients does not have a measurable negative impact on either the transparency or stability of the sol. For example, it is contemplated that the sols can include minor amounts of bactericidal agents, organic solvents (e.g. alcohols), film-forming aids, sequestering agents, pH adjusters, without limitation. In one embodiment, the sols will be substantially free of metal ions chosen from group I-VA, and the lanthanide or actinide series of the periodic table, by which is meant that no additional amounts of such metal ions are added to the sols or intermediate preparations beyond any trace amounts which are present as impurities in the titanium starting material or other reagents.

While the sols prepared according to the presently claimed and disclosed inventive concept(s) are transparent, it has also advantageously been found that the sols form films that, when applied to a substrate, are also transparent. Disclosed herein is a method of forming a transparent photocatalytic de-polluting, self-cleaning film or coating on a substrate by applying to the substrate the sols prepared according to the presently claimed and disclosed inventive concept(s). Generally, the films are allowed to dry on the substrate to a transparent coating having suitable adhesion to the substrate for use in the particular application or environment to which it is put. There is essentially no limit on the nature of the substrate to which the sols prepared according to the presently claimed and disclosed inventive concept(s) can be applied. Cement, metal, glass, polymeric, wood, ceramic, paper, textile, and leather substrates are each contemplated to be suitable for example, but not by way of limitation.

The stable, transparent sols prepared according to the presently claimed and disclosed inventive concept(s) will find particular utility in any application where photocatalytic activity is desired. Due to the transparent nature of the sols, they are ideally suited for coating surfaces or structures which are themselves transparent (i.e., glass) or for providing a coating that does not alter the appearance of the underlying substrate. Notable applications include, without limitation, photocatalytic coatings for air de-pollution on road surfaces, pavers and ceramic tiles, building exteriors, window glass, car windshields and the like. The sols prepared according to the presently claimed and disclosed inventive concept(s) will also find utility on fabrics, furniture, art works, for example, due to their self-cleaning properties. Such activity also imparts substitulates treated with the sols of the presently claimed and disclosed inventive concept(s) with a "stain-less" or "stain-free" or "stain-repellent" character. Additionally, the sols prepared according to the presently claimed and disclosed inventive concept(s) also provide UV-protection to the substrates to which they are applied. In a particular embodiment, for example but not by way of limitation, the sols prepared according to the presently claimed and disclosed inventive concept(s) can be coated on clothing or other items capable of being worn or disposed about a mammal such as a human. The clothing having the sols coated thereon would effectively block emitted X-rays from reaching through the clothing and interacting with the bodily tissues. In this manner, a protective garment or drape can be worn by an X-ray technician or laboratory worker and thereafter provide a level of protection from X-rays or other UV radiation.

Further, a structure with a titanium dioxide-containing layer can comprise a substrate and a substantially anatase titanium dioxide-containing layer on the surface of the substrate, wherein the transparency of the titanium dioxide-containing layer at visible light wavelength of 400-700 nm can be from about 65 % to about 95% and the titanium dioxide-containing layer can be formed from the neutral, stable and transparent photocatalytic titanium dioxide sol(s) described above. The thickness of the titanium dioxide-containing layer can be about 0.1-1.5 µm. The structure can also exhibit an initial amount of NOₓ removal from air in proximity to the titanium dioxide-containing layer of at least about 80%, or of at least about 75% after about 450 days.

The stable, transparent titanium dioxide sol prepared according to the presently claimed and disclosed inventive concept(s) has a photocatalytic effect that also has oxidoreductive functionality and thereby is capable of decomposing harmful constituents and also provides antibacterial properties to the coated substrate when irradiated with lights such as sunlight and/or an ultraviolet light source. Thus, coatings containing the stable and transparent dioxide sols prepared according to the presently claimed and disclosed inventive concept(s) or substrates coated with such sols have antibacterial properties. Further, such sols impart a deodorizing effect and are capable of reducing noxious fumes in the area adjacent the sols or substrates coated with such sols.

In accordance with another embodiment, an anti-bacterial composition can comprise any of the neutral, stable and transparent photocatalytic titanium dioxide sol(s) described herein; wherein the anti-bacterial composition, when placed in contact with bacteria, can kill at least 80% or at least 90% of the bacteria. The anti-bacterial composition can be used as a partial or complete coating on a device, such as but not limited to a medical device. Further, the photocatalytic anti-bacterial activity of the anti-bacterial composition, when placed in contact with the bacteria, is at least about 2 or at least about 3; wherein the photocatalytic antibacterial activity is determined in accordance with the formula: $log \left({B}_{L}/{C}_{L}\right) - log \left({B}_{D}/{C}_{D}\right) ;$ and wherein
B_{L} = mean bacterial count on a control surface not coated with the anti-bacterial composition after X hours light exposure;
C_{L} = mean bacterial count on a test surface coated with the anti-bacterial composition after X hours light exposure;
B_{D} = mean bacterial count on a control surface not coated with the anti-bacterial composition after X hours darkness;
C_{D} = mean bacterial count on a test surface coated with the anti-bacterial composition after X hours darkness; and
X ranges from about 14 to about 24 hours.

The sol based photocatalytic coating disclosed herein can also be doped with a metal to kill bacteria adhered to the surface. The metal, for example, but not by way of limitation, is selected from the group consisting of Ag, Zn, Mg, Sn, Fe, Co, Ni, Se, Ce, Cu and combinations thereof. Doping of the photocatalytic coating with the metal can be carried out by adding a soluble salt of the metal to the titanium sol. The metal salt can be a nitrate, a sulfate or a chloride, for example, but not by way of limitation. The amount of the metal salt added is generally about 0.01% to about 1% of the titanium compound by mole quantity although one of ordinary skill in the art would appreciate that greater amounts may be used depending upon the use to which the sol or photocatalytic coating will be put. The resultant solution which the doped metal can be used to form the photocatalytic coating(s) described hereinabove. In one embodiment for example, the photocatalytic coatings of the presently claimed and disclosed inventive concept(s) (with or without metal doping) inhibit and/or are resistant to the colonization of Methicillin-resistant *Staphylococcus aureus* (MRSA).

Alternatively, after forming the photocatalytic coating, a soluble salt of the metal can be applied thereon and the resulting coating can thereafter be subjected to irradiation or light emission in order to deposit the metal by photoreduction. The metal doped photocatalytic coating is capable of killing bacteria adhered to the surface. Moreover, such a metal doped photocatalytic coating can further inhibit the growth of microorganisms such as mold, algae and moss for example, but not by way of limitation. As a result, the surface of a building, a machine, apparatus, household, article and the like can be maintained clean, substantially without bacterial colonization over an extended period of time. As such, the sols prepared according to the presently claimed and disclosed inventive concept(s) have commercial applicability to the construction restoration and medical industries, for example, but not by way of limitation.

### EXAMPLES

The following examples are presented to aid in an understanding of the presently claimed and disclosed inventive concept(s) and are not intended to, and should not be construed to limit the presently claimed and disclosed inventive concept(s) in any way. The scope of the invention is defined by the appended claims.

### Example 1

200 g of un-neutralized titania sol having product designation CristalACTiv™ manufactured by Cristal Global (in which titania was in a weight % of 17.5±2.5 at a pH of 11.5±1) and diethyl amine as an alkaline peptizing agent were placed into a baffled mixing container and stirred using an impellor mixer, to provide movement and agitations throughout the whole volume. A pH probe was positioned to provide readings of the mixed solution. The acid mixtures of 5M phosphoric acid and 5M acetic acid were prepared. 100 g of each acid mixture were made and labeled according to the % (by mass) of the amount of 5M phosphoric acid in the mixture as shown in Table 1.

**Table 1-Acid Compositions**

| Mix Label | g, 5M Phosphoric acid | g, 5M Acetic acid |
|---|---|---|
| 25 % | 25 | 75 |
| 33 % | 33 | 67 |
| 50 % | 50 | 50 |
| 66 % | 66 | 34 |
| 75 % | 75 | 25 |
| 100 % | 100 | 0 |

The acid mixture was added at a substantially constant rate (about 0.5-0.7 g/min) equivalent to 0.25 - 0.35% of the sol mass per minute. Acid addition was slowed when a pH value of about 9.0 was reached so as to obtain a final pH of 8.5. When pH = 8.5 was obtained, acid addition was stopped, and mixing continued for at least about 60 minutes. During this period of time the pH increased slightly to approximately 8.7 to 8.9 Thus, small additions of acid were made as required in order to adjust the pH back to 8.5. About 5.5% of the acid mixture was added based on the weight of the alkaline titanium dioxide sol. The content of titanium dioxide was about 15 wt% and the content of diethyl amine was about 2.5 wt%, each based on the total weight of the neutralized titanium dioxide sol. The viscosity of the neutralized titanium dioxide sol was measured to be about 18 cps. The surface area, measured by BET, of a sample of the product as later dried was >250 m²/g.

### Example 2

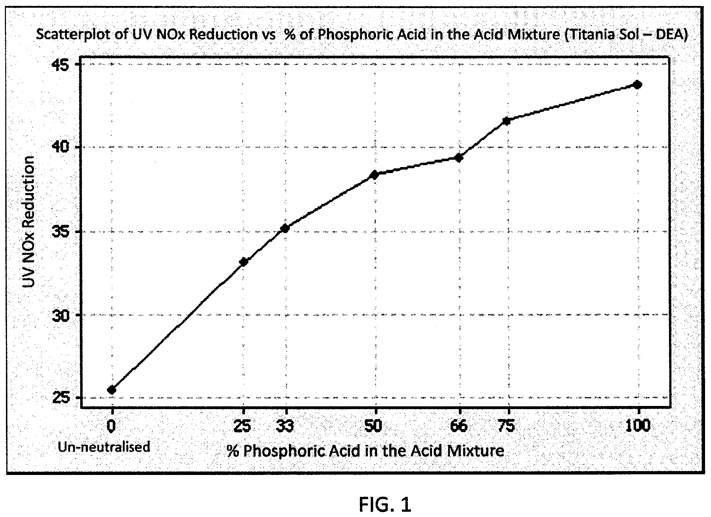

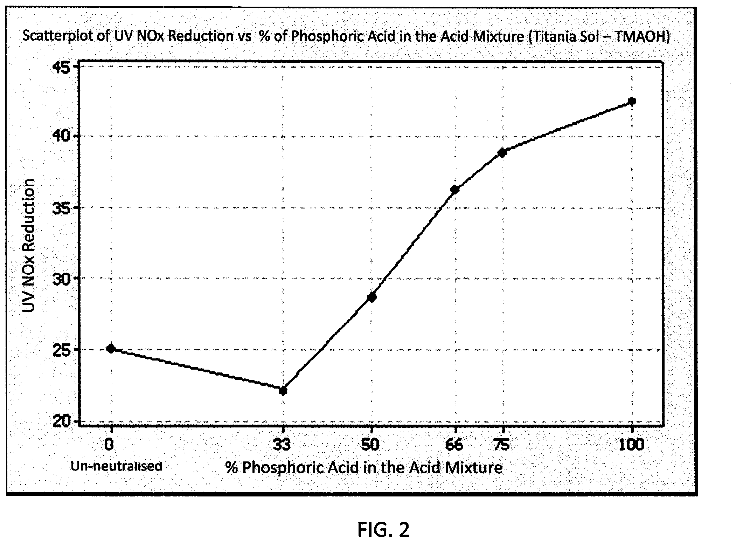

In order to investigate the photocatalytic activity of coatings prepared from the sols according to the presently claimed and disclosed inventive concept(s), the neutralized sols of Example 1, as well as a similarly prepared titania sol as that of Example 1 but containing tetramethylammonium hydroxide (TMAOH) instead of diethylamine, which were each neutralized with various mixtures of phosphoric and acetic acids (as described in Table 1), were deposited on test strips of 15mm x100mm cut out from Whatman 541 filter paper. About 0.05 g to about 0.0520 g of the neutralized sols on areas of about 5 to about 5.2 g/m², was added to each test strip. Each test strip was dried for 24 hours before NOₓ testing. The methodology for determining NOₓ reduction was substantially as described in U.S. Patent Pub. 2007/0167551. Briefly, the test samples were placed in an air-tight sample chamber and sealed. The sample chamber was in communication with a three channel gas mixer (Brooks Instrument, Holland) through which NO (nitrogen oxide), NO₂ (nitrogen dioxide), and compressed air containing water vapor were introduced into the chamber at predetermined levels. The test samples were irradiated with 6.2 W/m² UV radiation in the range of 300 to 400 nm from a UV lamp Model VL-6LM 365 & 312 nanometer wavelengths (BDH). Initial values and final values (after five minutes irradiation) of NOₓ were measured by a Nitrogen Oxides Analyzer Model ML9841B (Monitor Europe) connected to the sample chamber. The % reduction in NOₓ was measured as (ΔNOₓ/Initial NOₓ)x100. The results of these tests are shown and described in Figures 1 and 2.

The results of the examples indicate that the neutralized titanium dioxide sols exhibit a higher NOₓ reduction activity than the original un-neutralized alkaline titanium dioxide sol. In most all cases, the NOₓ reduction activities are increased as the amount of phosphoric acid added to the alkaline titanium dioxide sol is increased.

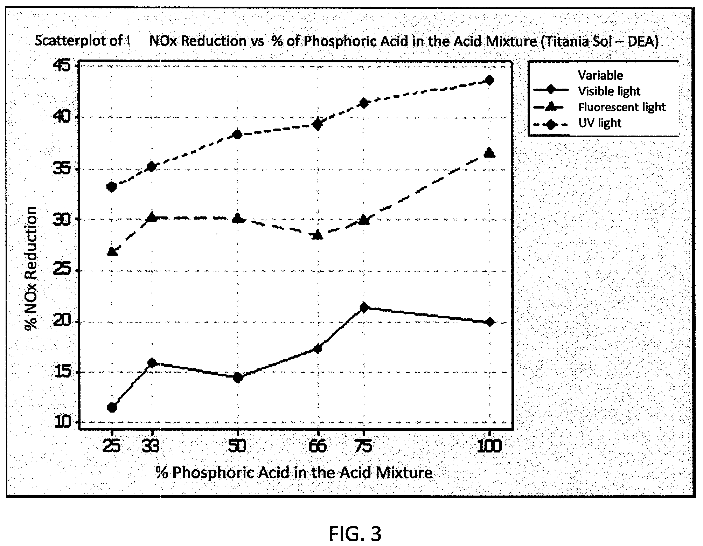

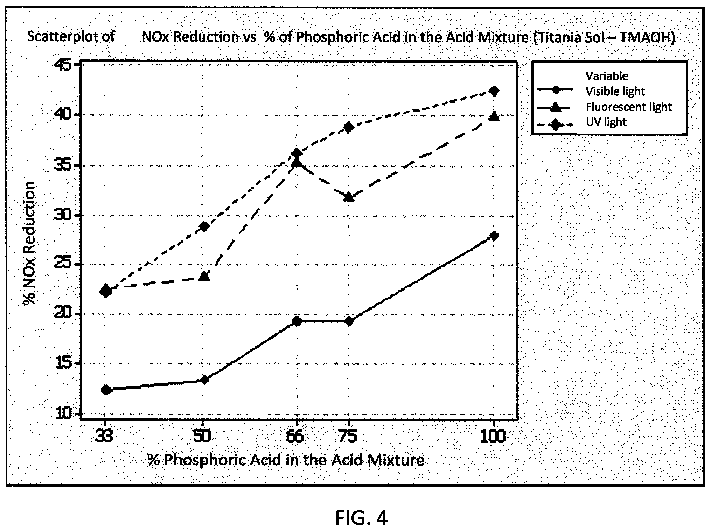

NOₓ removal was also studied under different lighting conditions and sources. In addition to UV, low intensity fluorescent strip lighting and visible light (as filtered through glass) were employed. Figures 3 and 4 show and describe the % of NOₓ reduction achieved using each of these different light sources. The results indicate that the neutralized titanium dioxide sol exhibits higher NOₓ reduction activities than the original un-neutralized alkaline titanium dioxide sol under all differing light sources.

### Example 3

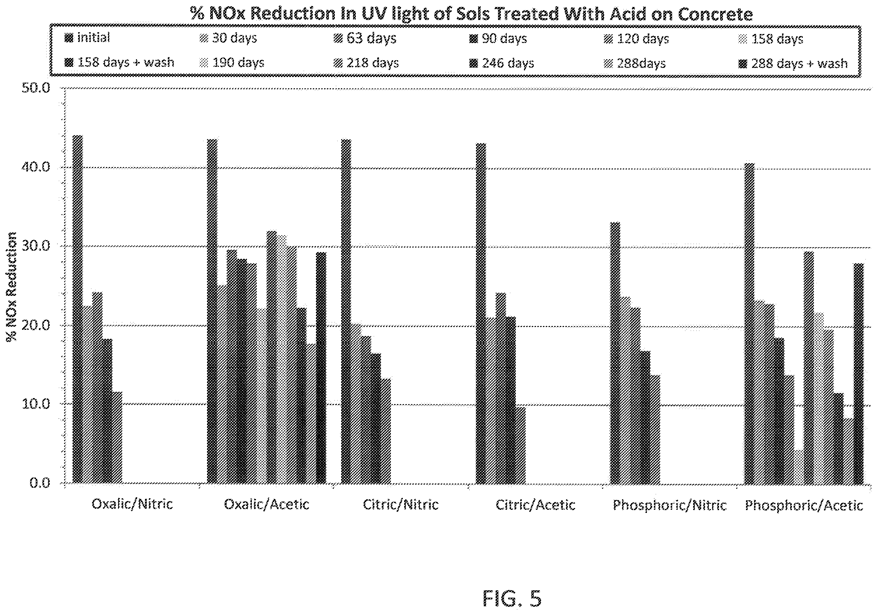

In order to investigate the photocatalytic activity of coatings prepared from the sols according to the presently claimed and disclosed inventive concept(s), titania sols were prepared in the same manner as in Example 1, but instead of treatment with the phosphoric acid/acetic acid mixture of Example 1, such titania sols were treated with the following acid mixtures: oxalic acid/nitric acid, oxalic acid/acetic acid, citric acid/nitric acid, citric acid/nitric acid, phosphoric acid/nitric acid, and phosphoric acid/acetic acid, respectively. For the individual sols, either 1M oxalic acid or 1M citric acid or 1M phosphoric acid was added in an amount of 0.1 wt% based on the total weight of the sol; with pH adjustment of the sols to 8.5 through the addition of either nitric acid or acetic acid. Such acid treated sols were deposited as thin layers on concrete substrates (about 0.3 ml of sol on an 18 cm² area). The activity against NOₓ pollutants under UV radiation (6.2W/m²) was measured at various intervals over a period of about 288 days (activities for the oxalic/acetic and phosphoric/acetic acid treated sols were measured over the full 288 day period; whereas the period for activity measurement for the remaining sols was up to 120 days). The methodology for determining NOₓ reduction was substantially as described in U.S. Patent Pub. 2007/0167551. The results of these tests are shown and described in Figure 5.

### Example 4

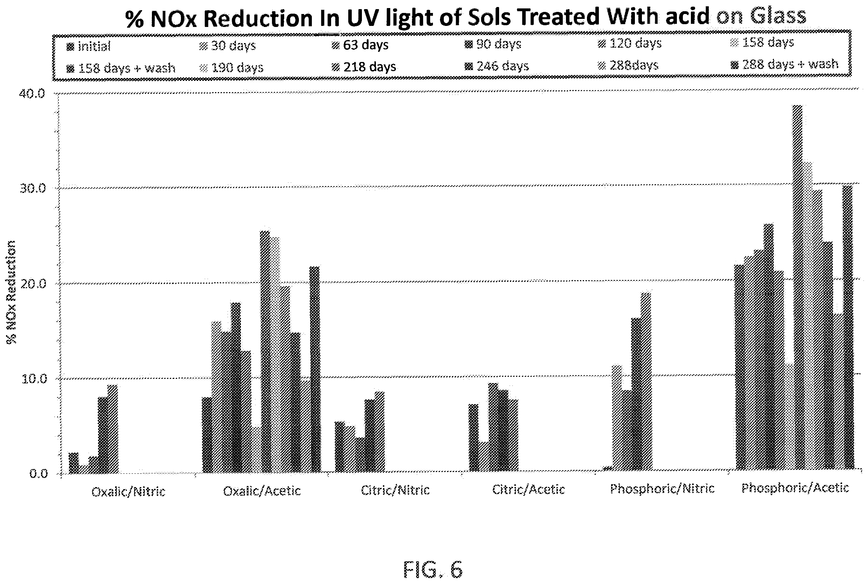

In order to investigate the photocatalytic activity of coatings prepared from the sols according to the presently claimed and disclosed inventive concepts, the titania sols from Example 3 above were also deposited as thin layers on glass substrates (about 0.3 ml of sol on an 18 cm² area). The activity against NOₓ pollutants under UV radiation (2 W/m²) was measured at various intervals over a period of about 288 days (activities for the oxalic/acetic and phosphoric/acetic acid treated sols were measured over the full 288 day period; whereas the period for activity measurement for the remaining sols was up to 120 days). The methodology for determining NOₓ reduction was substantially as described in U.S. Patent Pub. 2007/0167551. The results of these tests are shown and described in Figure 6.

### Example 5

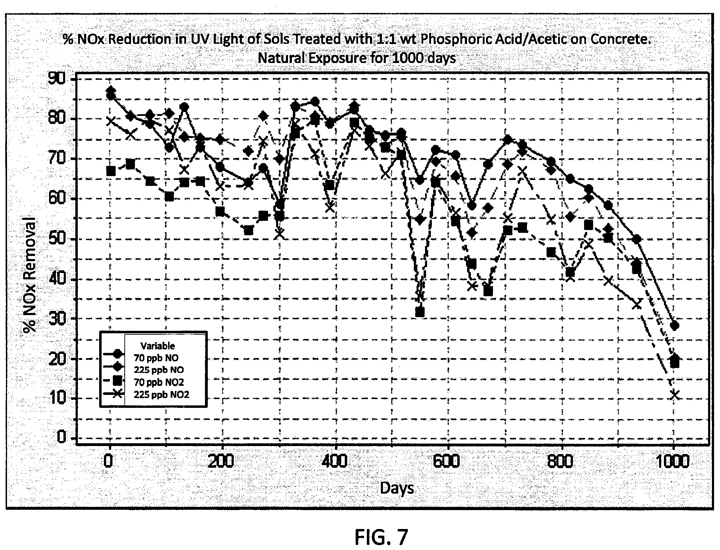

In order to investigate the photocatalytic activity of coatings prepared from the sols according to the presently claimed and disclosed inventive concepts, the neutralized titania sol of Example 1 (having a 1:1 weight ratio of phosphoric acid to acetic acid) was deposited as thin layers on concrete (about 0.3ml of 10 % titania sol on an 18 cm² area). The thin layers on concrete were separately exposed to 225 ppb of NO, 225 ppb of NO₂, 70 ppb of NO, and 70 ppb of NO₂, respectively. The activity against NOₓ pollutants under UV radiation (6.23 W/m², 295-400 nm) was measured at various intervals over a period of about 1000 days. The methodology for determining NOₓ reduction was substantially as described in U.S. Patent Pub. 2007/0167551. The results of these tests are shown and described in Figure 7.

### Example 6

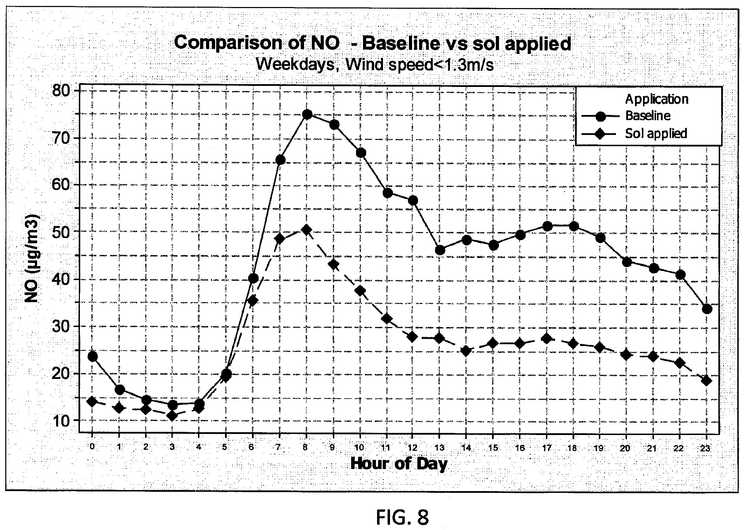

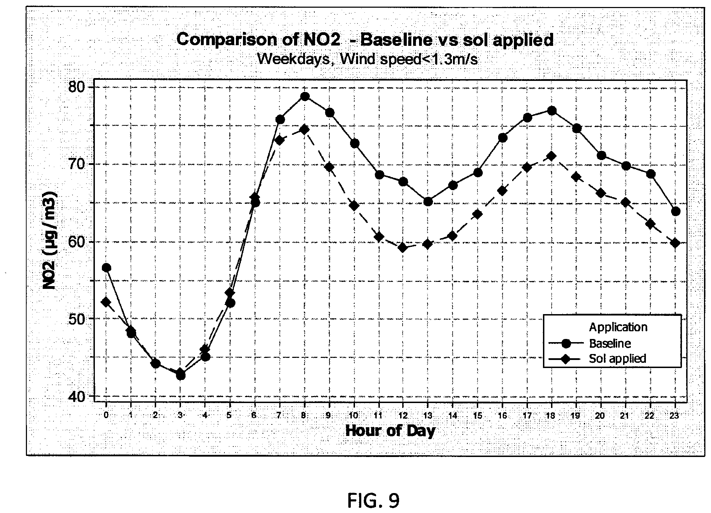

In order to investigate the photocatalytic activity of coatings prepared from the sols according to the presently claimed and disclosed inventive concepts, a thin layer of the neutralized titania sol of Example 1 (having a 1:1 weight ratio of phosphoric acid to acetic acid) which was diluted with water to form a 10 wt% titanium dioxide sol, was coated on a concrete wall (about 16L of the 10 wt% titanium dioxide sol on a 135 m² area) located in an area of Camden-London, England. (GPS coordinates of 51.518904 N and 0120685 W). The air quality of the area was above the UK air quality standards in place as of the date of start and completion of the test. NO and NO₂ along with wind speed, wind direction, temperature and humidity were measured at 15 minute intervals. The NO and NO₂ were measured at a probe a distance of 15 cm from the wall. Figures 8 and 9 show the comparisons of the amounts of NO and NO₂ in baseline with those measured on the concrete wall coated with a neutralized alkaline titanium dioxide sol. The comparisons show the average amounts of NO and NO₂ measured at each hour of the day for each weekday over a period of more than 2 years. The comparisons also include only the NO and NO₂ data wherein the wind speed was less than 1.3 m/s. The titania sol kept high NOₓ removal activity even after more than two years exposure to the environment with high contents of NO and NO₂ in the atmosphere surrounding the coated substrate of the titania sols.

### Example 7

In order to investigate the antibacterial activity of coatings prepared from the sols prepared according to the presently claimed and disclosed inventive concepts, samples of the neutralized titania sol of Example 1 (having a 1:1 weight ratio of phosphoric acid to acetic acid) were doped with Ag or Zn as given in Table 2. Samples B, C and D were diluted such that the titanium dioxide weight % was 10%.

**Table 2 Titanium Sols Used for Testing Antibacterial Activity**

| Sample | TiO₂, wt% | Doped Metal | Amount of Doped Metal, ppm |
|---|---|---|---|
| A | 14.5 | Ag | 1000 |
| B | 10 | Ag | 1000 |
| C | 10 | Zn | 5000 |
| D | 10 | -- | -- |

The doped and undoped titania sols were coated on glass slides to test the antibacterial activity against *Staphylococcus aureus.* The test for antibacterial activity (due to photo-activity) was conducted using a procedure based on standard number BS ISO 27447:2009 promulgated by the ISO, which specifies a test method for determining the antibacterial activity of materials containing a photocatalyst or having photocatalytic films on their surface. The above described method was used to measure the enumeration of bacteria under irradiation of UV light. The standard was based on standard number ISO 22196:2007 (formally JIS Z 2801:2000). Generally, however, the antibacterial activity was measured by quantifying the survival of bacterial cells which have been held in intimate contact for 24 hours at 21°C with a surface that contains an antibacterial agent. The antibacterial effect was measured by comparing the survival of bacteria on a treated material with that achieved on an untreated material.

The titania sols of Table 2 were applied to glass slides for study. Some slight modifications in certain parts of the method were necessary due to the hydrophobic nature of the materials. Samples were tested in duplicate against a suite of controls. A known amount of *Staphylococcus aureus* suspension, (-- i.e., 0.05ml of a suspension of the test organism (adjusted to contain approx 5 x10⁵ cells in 0.05ml))-was applied to the coated slides (coated samples) and on a "blank" slide (known to have no microbial activity and used as a control sample). The suspension was held in contact with 3 replicate coated samples and 6 replicate control samples. The 3 replicate coated samples and 3 of the 6 replicate control samples were then incubated for 24 hours at 21°C and relative humidity of not less than 90%. After incubation, the samples were transferred to individual containers containing 10 ml of sterile neutralizer solution. The 3 replicate control samples were also processed in this manner prior to incubation in order to provide baseline or control data. Replicates of each surface coated with a titania sol solution were exposed to light (daylight fluorescent bulbs) while others were placed in the dark. Following these steps, bacterial counts were determined. The bacterial counts obtained (shown as a geometric mean), together with the antibacterial activities (shown as a Log₁₀ reduction) are given in Table 3.

The antibacterial activity after light exposure was calculated as follows: ${R}_{L} = log \left({B}_{L}/A\right) - log \left({C}_{L}/A\right) = log \left({B}_{L}/{C}_{L}\right)$

The antibacterial activity in darkness was calculated as follows: ${R}_{D} = log \left({B}_{D}/A\right) - log \left({C}_{D}/A\right) = log \left({B}_{D}/{C}_{D}\right)$

The photocatalytic antibacterial activity was calculated as follows: ${R}_{P} = log \left({B}_{L}/{C}_{L}\right) - log \left({B}_{D}/{C}_{D}\right)$ where,
- R_{L}: is the antibacterial activity after light exposure
- R_{D}: is the antibacterial activity in darkness
- R_{P}: is the photocatalytic antibacterial activity
- A =: mean bacterial count on a control sample at time zero
- B_{L} =: mean bacterial count on a control sample after 14 hours light exposure (+ 10 hours darkness)
- C_{L} =: mean bacterial count on a test piece after 14 hours light exposure (+10 hours darkness)
- B_{D} =: mean bacterial count on a control sample after 24 hours darkness
- C_{D} =: mean bacterial count on a test piece after 24 hours darkness

**Table 3 Antibacterial Activity Test Results**

| Sample | TiO₂ g/m² | Mean Bacterial Count | | | Antibacterial Activity | | Photocatalytic Antibacterial Activity |
|---|---|---|---|---|---|---|---|
| | | Initial (x 10⁵) | 14/24 hrs light | 24 hrs dark | 14/24 hrs light | 24 hrs dark | |
| Control | -- | 6.2 | 5.3 x 10⁵ | 4.9 x 10⁵ | -- | -- | -- |
| A | 0.75 | 6.2 | < 10 | 1.2 x 10⁵ | > 4.7 | 0.61 | > 4.1 |
| B | 2.5 | 6.2 | <10 | 7.4 x 10⁴ | > 4.7 | 0.82 | > 3.9 |
| C | 5.0 | 6.2 | <10 | 7.3 x 10⁴ | > 4.7 | 0.82 | > 3.9 |
| D | 11.0 | 6.2 | <10 | 3.5 x 10³ | > 4.7 | 2.1 | > 2.6 |

Since a pass/fail criterion is not defined in the standard,the following criterion (as shown in Table 4) was used to comment on the level of activity determined.

**Table 4 Antibacterial Activity Ranking**

| Antibacterial Activity | Ranking | % Kill |
|---|---|---|
| < 1.5 | Poor | < 96.8 |
| 1.5 - 2.0 | Borderline | 96.8-99.0 |
| 2.0 - 3.0 | Good | >99.0-99.9 |
| > 3.0 | Excellent | >99.9 |

The test results indicate that all the titania sols of the presently claimed and disclosed inventive concepts (whether doped or undoped with a metal) demonstrate excellent antibacterial activities after exposure to daylight fluorescent bulbs.

### Example 8

A first sol which is a neutralized titania sol of Example 1 (having a 1:1 weight ratio of phosphoric acid to acetic acid, and which was diluted to 10 wt% TiO₂ from 15 wt%) and a second sol (made from a different precursor and having a concentration of TiO₂ between 0.5 and 2.0%) were used to test the antibacterial activity against MRSA (Methicillin-resistant *Staphylococcus aureus*). Table 5 gives the compositions of the tested samples.

**Table 5 Samples for Testing Antibacterial Activity against MRSA**

| Sample | Coating | TiO₂ content, % |
|---|---|---|
| 1 | First sol on blank Styrene/Acrylic on aluminum Q panel | 10 |
| 2 | First sol on stainless steel panel | 10 |
| 3 | Second sol on glass, Sample A | 0.5 |
| 4 | Second sol on glass, Sample B | 2 |
| 5 | First sol on glass, Sample C | 10 |

The test for antibacterial activity (due to photo-activity) was conducted using a procedure based on standard number BS ISO 27447:2009, which specifies a test method for determining the antibacterial activity of materials containing a photocatalyst or having photocatalytic films on the surface. The method was used to measure the enumeration of bacteria under irradiation of UV light. The standard was based on standard number ISO 22196:2007 (formally JIS Z 2801:2000).

The coated panels (Samples 1 and 2) were each cut into test pieces measuring approximately 35mm x 35 mm. Testing was carried out using *Staphylococcus aureus* ATCC 43300 (MRSA). For each test sample 0.1 ml of a suspension of the test organism (adjusted to contain approximately 5 x10⁵ cells in 0.1 ml) was placed on the coated surface of each of 6 replicates and on 6 replicate glass slides (used as controls and known to have no antibacterial activity). The suspension was held in intimate contact with the test and control surfaces using glass cover slips, 20 mm x 20 mm in size. In order to provide a time zero inoculation level, an additional triplicate set of control samples were inoculated and washed off immediately, each into 10 ml of sterile neutralizer solution and microbial counts were determined to give a time zero count.

For each set of 6 replicates, 3 were exposed in a glass assay plate for 14 hours out of 24 hours under daylight fluorescent lamps. The assay plate containing the remaining 3 replicates of each test sample and control was wrapped in several layers of black plastic to prevent any light reaching the test films. This assay plate remained in darkness for the full 24 hours. Incubation for both sets of samples was at 21°C and relative humidity of not less than 90%. After this time the test pieces were washed off, each into 10 ml of sterile distilled water, and bacterial counts were determined.

Samples 3-5 were tested using *Staphylococcus aureus* ATCC 43300 (MRSA). Because of the hydrophilic nature of the coated surfaces (which increased with increasing concentration of TiO₂), the method used previously was modified. An inoculum volume of 0.1 ml which is normally used, was found to spread too much on Sample C and could not be 'trapped' under the cover slip. A volume of 0.05 ml was used instead as this was considered to be the best compromise for use on all 3 surfaces.

A 0.05 ml quantity of a suspension of the test organism (adjusted to contain approximately 5 x10⁵ cells in 0.05 ml) was placed on the coated surface of each of 6 test sample replicates and on 6 replicate glass slides (used as the controls and known to have no antibacterial activity). The suspension was held in intimate contact with the test and control surfaces using glass cover slips, 20 mm x 20 mm in size. In order to provide a time zero inoculation level, an additional triplicate set of control samples were inoculated (again using an inoculum volume of 0.05 ml) and washed off immediately, each into 10 ml of sterile neutralizer solution, and microbial counts were determined to give a time zero count.

As described previously, 3 replicates of each coated slide plus 3 controls were exposed to light and 3 replicates of each coated slide plus 3 controls were placed in darkness, following which bacterial counts were determined. The bacterial counts obtained (shown as a geometric mean), together with the antibacterial activities (shown as Log₁₀ reduction), are given in Tables 6 (Coated Panel) and 7 (Coated Glass Slides). The calculations of antibacterial activity and photocatalytic antibacterial activity are the same as those described in Example 7.

**Table 6 Antibacterial Activity Test Results: Coated Panel**

| Sample | Mean Bacterial Count | | | Antibacterial Activity | | Photocatalytic Antibacterial Activity |
|---|---|---|---|---|---|---|
| | Initial (x 10⁵) | 14/24 hrs light | 24 hrs dark | 14/24 hrs light | 24 hrs dark | |
| Control | 6.2 | 3.1 x 10⁵ | 3.3 x 10⁵ | -- | -- | -- |
| First sol on paint | 6.2 | 1.3 x 10³ | 3.2 x 10⁵ | 2.4 | 0.013 | 2.4 |
| First sol on steel | 6.2 | <10 | 1.2 x 10³ | > 4.5 | 2.4 | > 2.1 |

**Table 7 Antibacterial Activity Test Results: Coated Glass Slides**

| Sample | Mean Bacterial Count | | | Antibacterial Activity | | Photocatalytic Antibacterial Activity |
|---|---|---|---|---|---|---|
| | Initial (x 10⁵) | 14/24 hrs light | 24 hrs dark | 14/24 hrs light | 24 hrs dark | |
| Control | 6.0 | 1.6 x 10⁵ | 3.6 x 10⁵ | -- | -- | -- |
| Second sol Sample A | 6.0 | 1.9 x 10³ | 1.6 x 10⁵ | 1.9 | 0.35 | 1.6 |
| Second sol Sample B | 6.0 | 1.2 x 10³ | 1.3 x 10⁵ | 2.1 | 0.44 | 1.7 |
| First sol Sample C | 6.0 | < 10 | 1.1 x 10⁵ | > 4.2 | 0.51 | > 3.7 |

The criterion for analyzing the level of antibacterial activity is the same as listed in Table 4 of Example 7. Referring to Table 6, PCX-S7 on paint/Q panel demonstrated good antibacterial activity when exposed to light but very poor activity in darkness. Overall, good photocatalytic activity was demonstrated. PCX-S7 on stainless steel demonstrated excellent antibacterial activity when exposed to light and good activity in darkness. Overall, good photocatalytic activity against MRSA was demonstrated.

Referring to Table 7 Samples A and B (PCX-S2) demonstrated borderline to good antibacterial activity when exposed to light but poor activity in darkness. Overall, borderline photocatalytic activity against MRSA was demonstrated. Sample C (PCX-S7 on glass), however, demonstrated excellent antibacterial activity when exposed to light but poor activity in darkness. Overall, excellent photocatalytic activity against MRSA was demonstrated.

### Example 9

Six paint samples and four sol samples (Sols 1-4) were tested for antibacterial activity against *Staphylococcus aureus.* The paint samples, labeled 1 to 6, contained different TiO₂ photocatalysts and were applied to aluminum Q panels and were prepared using the 1:1 phosphoric acid/acetic acid weight ratio sol of Example 1. The sol samples, labeled 1 to 4, were colloid dispersions, prepared in the same manner as the sols in Example 1, and applied to glass slides with TiO₂ loadings of approximately, 0.75, 2.5, 5.0 and 11 g/m², respectively.

The test for antibacterial activity (due to photo-activity) was conducted using a procedure based on standard number BS ISO 27447:2009, which specifies a test method for determining the antibacterial activity of materials containing a photocatalyst or having photocatalytic films on the surface. The method was used to measure the enumeration of bacteria under irradiation of UV light. The standard was based on standard number ISO 22196:2007 (formally JIS Z 2801:2000).

The paint coated panels were each cut into test pieces measuring approximately 35mm x 35 mm. Testing was carried out using *Staphylococcus aureus* ATCC 6538. A 0.1 ml quantity of a suspension of the test organism (adjusted to contain approsimately 5 x10⁵ cells in 0.1 ml) was placed on the paint coated surface of each of 6 test sample replicates and on replicated glass slides (used as controls and known to have no antibacterial activity). The suspension was held in intimate contact with the test and control surfaces using glass cover slips, 20 mm x 20 mm in size. In order to provide a time zero inoculation level, an additional triplicate set of control samples were inoculated and washed off immediately, each into 10 ml of sterile neutralizer solution and microbial counts were determined in order to provide a time zero count.

Of the 6 replicates of each sample, 3 were exposed in a glass assay plate for 14 hours out of 24 hours under daylight fluorescent lamps. The assay plate containing the remaining 3 replicates of each test sample was wrapped in several layers of black plastic to prevent any light from reaching the test films. This assay plate remained in darkness for the full 24 hours. Incubation for both sets of samples was at 21°C and relative humidity of not less than 90%. After this time the test pieces were washed off, each into 10 ml of sterile distilled water, and bacterial counts were determined.

The titania sol coated glass slides were tested using *Staphylococcus aureus* ATCC 6538. Because of the hydrophilic nature of the titania sol coatings (which increased with increasing concentration of TiO₂), the method used above was modified. An inoculum volume of 0.1 ml which is normally used, was found to spread too much on Sol 4 and could not be 'trapped' under the cover slip. A volume of 0.05 ml was used instead as this was considered to be the best compromise for use on all 4 sol surfaces. A 0.05 ml quantity of a suspension of the test organism (adjusted to contain approximately 5 x10⁵ cells in 0.05 ml) was placed on the coated surface of each of 6 test sample replicates and on replicated glass slides (used as the control and known to have no antibacterial activity). The suspension was held in intimate contact with the test and control surfaces using glass cover slips, 20 mm x 20 mm in size.

In order to provide a time zero inoculation level, an additional triplicate set of control samples were inoculated (again using an inoculum volume of 0.05 ml) and washed off immediately, each into 10 ml of sterile neutralizer solution, and microbial counts were determined to give a time zero count. As described previously, replicates of each titania sol surface were exposed to light and 3 were placed in darkness, following which bacterial counts were determined.

The bacterial counts obtained (shown as a geometric mean), together with the antibacterial activities (shown as Log₁₀ reduction), are provided in Tables 8 to 10. The calculations of antibacterial activity and photocatalytic antibacterial activity are the same as those described in Example 7.

**Table 8 Antibacterial Activity Test Results: Paints 1-3**

| Sample | Mean Bacterial Count | | | Antibacterial Activity | | Photocatalytic Antibacterial Activity |
|---|---|---|---|---|---|---|
| | Initial (x 10⁵) | 14/24 hrs light | 24 hrs dark | 14/24 hrs light | 24 hrs dark | |
| Control | 5.4 | 3.1 x 10⁵ | 3.2 x 10⁵ | -- | -- | -- |
| Paint 1 | 5.4 | 2.7 x 10⁵ | 3.1 x 10⁵ | 0.06 | 0.01 | 0.05 |
| Paint 2 | 5.4 | 2.6 x 10⁵ | 2.9 x 10⁵ | 0.08 | 0.04 | 0.04 |
| Paint 3 | 5.4 | 2.6 x 10⁵ | 2.8 x 10⁵ | 0.08 | 0.06 | 0.02 |

**Table 9 Antibacterial Activity Test Results: Paints 4-6**

| Sample | Mean Bacterial Count | | | Antibacterial Activity | | Photocatalytic Antibacterial Activity |
|---|---|---|---|---|---|---|
| | Initial (x 10⁵) | 14/24 hrs light | 24 hrs dark | 14/24 hrs light | 24 hrs dark | |
| Control | 6.1 | 5.4 x 10⁵ | 5.8 x 10⁵ | -- | -- | -- |
| Paint 4 | 6.1 | 1.9 x 10⁵ | 4.5 x 10⁵ | 0.45 | 0.11 | 0.34 |
| Paint 5 | 6.1 | 1.9 x 10⁵ | 5.5 x 10⁵ | 0.45 | 0.02 | 0.43 |
| Paint 6 | 6.1 | 3.3 x 10⁵ | 5.2 x 10⁵ | 0.21 | 0.05 | 0.16 |

**Table 10 Antibacterial Activity Test Results: Sols (SA)**

| Sample | Mean Bacterial Count | | | Antibacterial Activity | | Photocatalytic Antibacterial Activity |
|---|---|---|---|---|---|---|
| | Initial (x 10⁵) | 14/24 hrs light | 24 hrs dark | 14/24 hrs light | 24 hrs dark | |
| Control | 6.2 | 5.3 x 10⁵ | 4.9 x 10⁵ | -- | -- | -- |
| Sol 1 | 6.2 | < 10 | 1.2 x 10⁵ | > 4.7 | 0.61 | > 4.1 |
| Sol 2 | 6.2 | < 10 | 7.4 x 10⁴ | > 4.7 | 0.82 | > 3.9 |
| Sol 3 | 6.2 | < 10 | 7.3 x 10⁴ | > 4.7 | 0.82 | > 3.9 |
| Sol 4 | 6.2 | < 10 | 3.5 x 10³ | > 4.7 | 2.1 | > 2.6 |

The criterion for analyzing the level of antibacterial activity is the same as listed on Table 4 in Example 8 above. Referring to Tables 8 and 9, the coated panel showed only very poor activity against *S. aureus,* both in darkness and after exposure to daylight fluorescent lamps, and hence significant photocatalytic antibacterial activity was not demonstrated.

Referring to Table 10, all 4 sol samples, however, demonstrated excellent antibacterial activity after exposure to daylight fluorescent bulbs. Sols 1 to 3 clearly demonstrated excellent photocatalytic antibacterial activity. The level of photocatalutic activity of Sol 4 was considered good, at the very least, although the actual level of photocatalytic activity could not be determined as this sample also demonstrated some antibacterial activity in the absence of light.

### Example 10

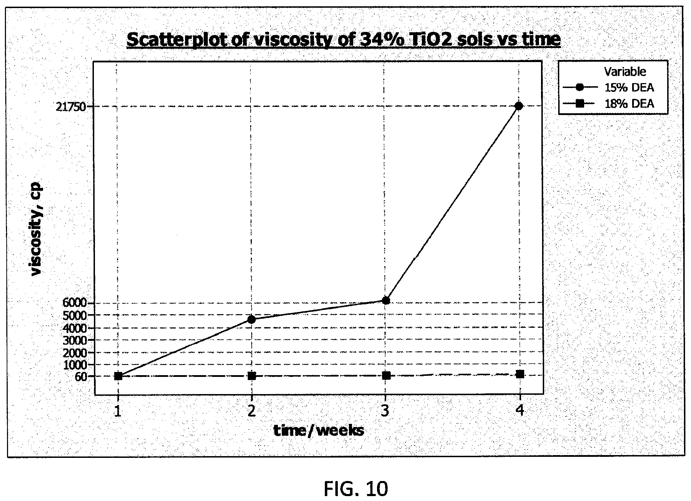

In order to investigate the stability of coatings prepared from the sols prepared according to the presently claimed and disclosed inventive concept(s), titania sols were prepared in the same manner as in Example 1, but with the following differences. Two sols were prepared without neutralization and contained 34 wt% titanium dioxide and 15 wt% and 18 wt% diethyl amine, respectively. Figure 10 is a plot of viscosity over time for these unneutralized sols, and shows that use of 18 wt% diethyl amine results in improved stability as compared to the sol containing 15 wt% diethyl amine.

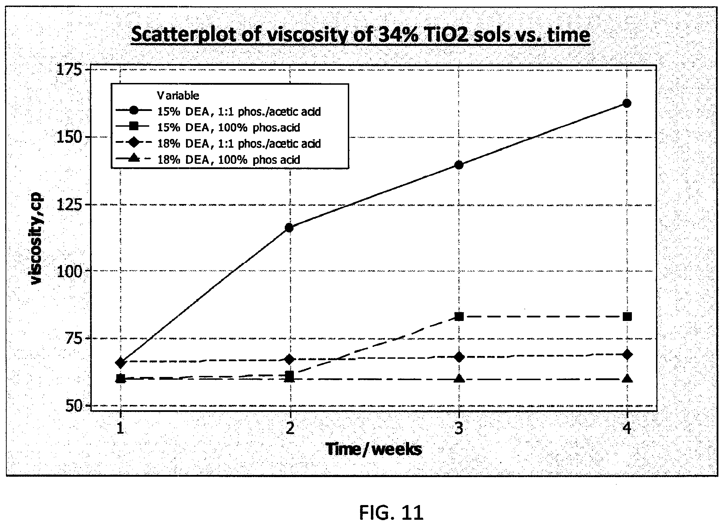

Four additional sols were prepared which also contained 34 wt% titanium dioxide, and with neutralization. The first neutralized sol contained 15 wt% diethyl amine and was neutralized with a 1:1 weight ratio of phosphoric acid to acetic acid. The second neutralized sol contained 15 wt% diethyl amine and was neutralized with 100 wt% phosphoric acid. The third neutralized sol contained 18 wt% diethyl amine and was neutralized with a 1:1 weight ratio of phosphoric acid to acetic acid. The fourth neutralized sol contained 18 wt% diethyl amine and was neutralized with 100 wt% phosphoric acid. Each of the sols were also washed with demineralized water. Figure 11 is a plot of viscosity over time for these neutralized sols. Figure 11 shows that the stability is greatly increased for the 15 wt% diethyl amine with neutralization using 100 wt% phosphoric acid as compared to neutralization with a 1:1 wt ratio of phosphoric acid to acetic acid. Figure 11 also shows that the sols containing 18 wt% diethyl amine are more stable than the sols containing 15 wt% diethyl amine, and that the sol containing 18 wt% diethyl amine and neutralized with 100 wt% phosphoric acid is the most stable.

### Example 11

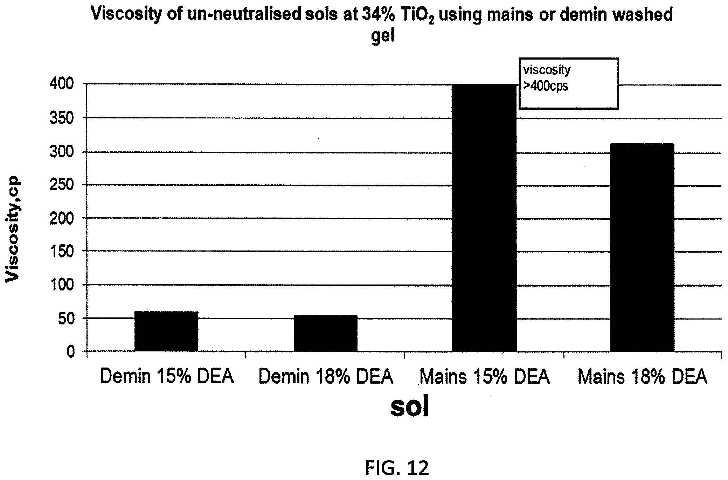

In order to investigate the stability of coatings prepared from the sols prepared according to the presently claimed and disclosed inventive concept(s), four titania sols were prepared in the same manner as in Example 1, but with the following differences. The four sols contained 34 wt% titanium dioxide, and were not neutralized. The first sol contained 15 wt% diethyl amine and was washed with demineralized water resulting in a calcium content of 71 ppm and a sodium content of less than 13 ppm. The second sol contained 18 wt% diethyl amine and was also washed with demineralized water resulting in a calcium content of 71 ppm and a sodium content of less than 13 ppm. The third sol contained 15 wt% diethyl amine and was washed with mains water resulting in a calcium content of 2535 ppm and a sodium content of 23 ppm. The fourth sol contained 18 wt% diethyl amine and was also washed with mains water resulting in a calcium content of 2535 ppm and a sodium content of 23 ppm. Figure 12 is a plot of viscosity for each of the sols post washing. Figure 12 shows that the stability is greatly increased for both the 15 wt% and the 18 wt% diethyl amine sols with washing using demineralized water as opposed to washing with mains water.

### Example 12

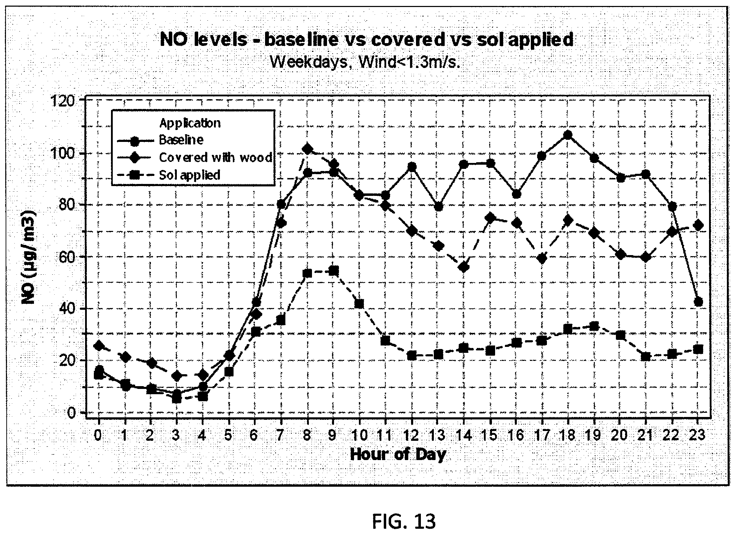

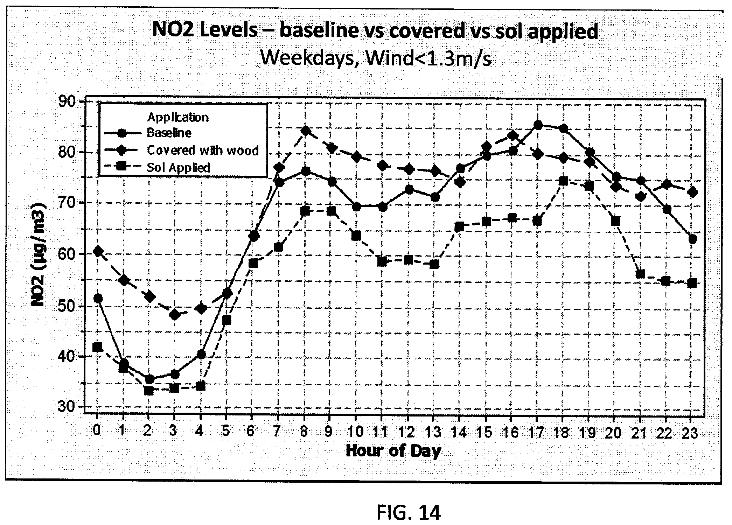

In order to investigate the photocatalytic activity of coatings prepared from the sols prepared according to the presently claimed and disclosed inventive concepts, a thin layer of the neutralized titania sol of Example 1 (having a 1:1 weight ratio of phosphoric acid to acetic acid) which was diluted with water to form a 10 wt% titanium dioxide sol, was coated on a concrete wall (about 16L of the 10 wt% titanium dioxide sol on a 135 m² area) located in an area of Camden-London, England. (GPS coordinates of 51.518904 N and 0120685 W). NO and NO₂ along with wind speed, wind direction, temperature and humidity were measured at 15 minute intervals. The NO and NO₂ were measured at a probe a distance of 15 cm from the wall. Prior to the coating of the concrete wall with the titanium dioxide sol, baseline measurements of NO and NO₂ were acquired in year 1 for the months of September through December. Following the baseline measurements, the concrete wall was coated as described above and NO and NO₂ were measured in year 2 over the months of September through December. The concrete wall was then covered with wood to cover the titanium dioxide sol coating, and NO and NO₂ were measured in year 3 over the months of September through December. Figures 13 and 14 show the comparisons of the amounts of NO and NO₂ in baseline with those measured with the concrete wall coated with the titanium dioxide sol and with those measurements with the concrete wall covered with wood. The comparisons show the average amounts of NO and NO₂ measured at each hour of the day for each weekday for the months of September, October and December for years 1, 2 and 3, respectively. The data from November for each of those years was not used as the NO and NO₂ levels were exceptionally low at other nearby sites suggesting that there was another factor affecting the NO and NO₂ levels that month. The comparisons also include only the NO and NO₂ data wherein the wind speed was less than 1.3 m/s. Figures 13 and 14 show that coating the concrete wall with the titanium dioxide sol resulted in significant NOₓ removal activity over the baseline levels. Figures 13 and 14 also show that upon covering the coating for the following year, the NOₓ levels basically returned to the baseline levels, thus demonstrating the effectiveness of the titanium dioxide sol coating in NOₓ reduction.

Therefore, it has been demonstrated and shown that sols of titanium dioxide nanoparticles can be made and such sols are useful for providing transparent photocatalytic coatings on a substrate which are depolluting, self-cleaning, stain resistant, anti-bacterial, and/or anti-fungal/anti-microbial.

Many modifications and variations of the presently claimed and disclosed inventive concepts can be made without departing from its scope, as will be apparent to those skilled in the art. The specific embodiments described herein are offered by way of example only, and the presently claimed and disclosed inventive concepts is to be limited only by the terms of the appended claims.

## Claims

1. A method for preparing a neutral, stable and transparent photocatalytic titanium dioxide sol, comprising the steps of:
(1) reacting a hydrous titanium dioxide gel with an alkaline peptizing agent to provide a peptized alkaline titanium dioxide sol;
(2) neutralizing the peptized alkaline titanium dioxide sol with phosphoric acid to obtain a neutral, stable and transparent photocatalytic titanium dioxide sol;
wherein the final pH value of the resulting neutralized sol is controlled so as to be within a range of 8 to 9.

2. The method of claim 1, wherein the alkaline peptizing agent is selected from the group consisting of an alkylamine, a quaternary ammonium hydroxide and combinations thereof, for example:
i) the alkylamine is diethyl amine; or
ii) the quaternary ammonium hydroxide is tetramethyl ammonium hydroxide.

3. The method of claim 2, wherein the alkaline peptizing agent is present in the neutral, stable and transparent photocatalytic titanium dioxide sol in an amount of at least 7 wt%, based on the combined weight of the alkaline peptizing agent and titanium dioxide, wherein the peptized alkaline titanium dioxide sol is neutralized with phosphoric acid, optionally:
i) the neutral, stable and transparent photocatalytic titanium dioxide sol comprises in the range of from 0.5 to 20 wt% titanium dioxide; or
ii) the neutral, stable and transparent photocatalytic titanium dioxide sol comprises in the range of from 30 to 40 wt% titanium dioxide.

4. The method of claim 2, wherein the alkaline peptizing agent is present in the neutral, stable and transparent photocatalytic titanium dioxide sol in an amount of at least 18 wt%, based on the combined weight of the alkaline peptizing agent and titanium dioxide, for example the peptized alkaline titanium dioxide sol is neutralized with a combination of phosphoric acid and acetic acid; wherein the weight ratio of the phosphoric acid to the acetic acid is in the range of from 0.8:1 to 1.2:1, and wherein the phosphoric acid and the acetic acid are simultaneously added to the peptized alkaline titanium dioxide sol, optionally:
i) the neutral, stable and transparent photocatalytic titanium dioxide sol comprises in the range of from 0.5 to 20 wt% titanium dioxide; or
ii) the neutral, stable and transparent photocatalytic titanium dioxide sol comprises in the range of from 30 to 40 wt% titanium dioxide.

5. The method of claim 1, wherein the neutral, stable and transparent photocatalytic titanium dioxide sol:
i) comprises titanium dioxide crystallites having an average particle size of less than 50 nm, at least 90% of which are in the anatase form; or
ii) is doped with a metal, wherein the metal is selected from the group consisting of Ag, Zn, Mg, Sn, Fe, Co, Ni, Se, Ce, Cu and combinations thereof; or
iii) is washed with demineralized water such that the concentration of calcium ions is less than 71 ppm and the concentration of sodium ions is less than 13 ppm in the resulting washed neutral, stable and transparent photocatalytic titanium dioxide sol, and wherein the filtrate conductivity is equal to or less than 500 µS, optionally the viscosity of the washed neutral, stable and transparent photocatalytic titanium dioxide sol is less than 100 centipoise after at least 4 weeks at room temperature.

6. A method for preparing a neutral, stable and transparent photocatalytic titanium dioxide sol, comprising:
(1) precipitating hydrous titanium dioxide from a solution having a titanium containing compound therein to form titanium dioxide particles;
(2) forming a dispersion of the titanium dioxide particles in a liquid medium;
(3) treating the dispersion with an alkaline peptizing agent to obtain a peptized alkaline titanium dioxide sol;
(4) neutralizing the peptized alkaline titanium dioxide sol with phosphoric acid to obtain a neutral, stable and transparent photocatalytic titanium dioxide sol;
wherein the final pH value of the resulting neutralized sol is controlled so as to be within a range of 8 to 9.

7. The method of claim 6, wherein the titanium containing compound is:
i) selected from the group consisting of titanium alkoxide, titanium oxychloride, titanium sulfate, titanium oxynitrate, titanyl acetylacetonate, and combinations thereof, optionally the titanium containing compound is titanium sulfate and further comprises the step of treating a solution of the titanium sulfate with an ion-exchange resin to de-ionize the solution prior to using the solution of the titanium sulfate in the step of precipitating the hydrous titanium dioxide; or
ii) treated with a basic chelating agent prior to precipitating the hydrous titanium dioxide, wherein the basic chelating agent is selected from the group consisting of dialkanolamine, trialkanolamine and combinations thereof.

8. The method of claim 6, wherein the alkaline peptizing agent is:
i) a mono-, di-, or trialkylamine, optionally the mono-, di-, or trialkylamine is selected from the group consisting of tert-butylamine, triethylamine, diethylamine, isopropylamine, diisopropyl-ethylamine, isobutylamine, isoamylamine and combinations thereof; or
ii) a quaternary ammonium hydroxide, optionally the quaternary ammonium hydroxide is a tetraalkylammonium hydroxide.

9. The method of claim 6, wherein the neutral, stable and transparent photocatalytic titanium dioxide sol comprises titanium dioxide crystallites having an average particle size of less than 10 nm, at least 90% of which are in the anatase form.

10. The method of claim 1 or 6 wherein the step of neutralizing the peptized alkaline titanium dioxide sol is carried out with phosphoric acid and acetic acid.

## Patentansprüche

1. Verfahren zur Herstellung eines neutralen, stabilen und transparenten photokatalytischen Titandioxid-Sols, umfassend die Schritte:
(1) Umsetzen eines wasserhaltigen Titandioxid-Gels mit einem alkalischen Peptisiermittel, um ein peptisiertes alkalisches Titandioxid-Sol zu erhalten;
(2) Neutralisieren des peptisierten alkalischen Titandioxid-Sols mit Phosphorsäure, um ein neutrales, stabiles und transparentes photokatalytisches Titandioxid-Sol zu erhalten;
wobei der End-pH-Wert des erhaltenen neutralisierten Sols so gesteuert wird, dass er in einem Bereich von 8 bis 9 liegt.

2. Verfahren gemäß Anspruch 1, wobei das alkalische Peptisiermittel ausgewählt ist aus der Gruppe bestehend aus einem Alkylamin, einem quaternären Ammoniumhydroxid und Kombinationen davon, wobei beispielsweise:
i) das Alkylamin Diethylamin ist; oder
ii) das quaternäre Ammoniumhydroxid Tetramethylammoniumhydroxid ist.

3. Verfahren gemäß Anspruch 2, wobei das alkalische Peptisiermittel in dem neutralen, stabilen und transparenten photokatalytischen Titandioxid-Sol in einer Menge von wenigstens 7 Gew.-%, bezogen auf das kombinierte Gewicht des alkalischen Peptisiermittels und des Titandioxids, vorhanden ist, wobei das peptisierte alkalische Titandioxid-Sol mit Phosphorsäure neutralisiert wird, wobei gegebenenfalls:
i) das neutrale, stabile und transparente photokatalytische Titandioxid-Sol in dem Bereich von 0,5 bis 20 Gew.-% Titandioxid umfasst; oder
ii) das neutrale, stabile und transparente photokatalytische Titandioxid-Sol in dem Bereich von 30 bis 40 Gew.-% Titandioxid umfasst.

4. Verfahren gemäß Anspruch 2, wobei das alkalische Peptisiermittel in dem neutralen, stabilen und transparenten photokatalytischen Titandioxid-Sol in einer Menge von wenigstens 18 Gew.-%, bezogen auf das kombinierte Gewicht des alkalischen Peptisiermittels und des Titandioxids, vorhanden ist, wobei beispielsweise das peptisierte alkalische Titandioxid mit einer Kombination von Phosphorsäure und Essigsäure neutralisiert wird; wobei das Gewichtsverhältnis der Phosphorsäure zu der Essigsäure in dem Bereich von 0,8:1 bis 1,2:1 liegt und wobei die Phosphorsäure und die Essigsäure gleichzeitig zu dem peptisierten alkalischen Titandioxid-Sol zugegeben werden, wobei gegebenenfalls:
i) das neutrale, stabile und transparente photokatalytische Titandioxid-Sol in dem Bereich von 0,5 bis 20 Gew.-% Titandioxid umfasst; oder
ii) das neutrale, stabile und transparente photokatalytische Titandioxid-Sol in dem Bereich von 30 bis 40 Gew.-% Titandioxid umfasst.

5. Verfahren gemäß Anspruch 1, wobei das neutrale, stabile und transparente photokatalytische Titandioxid-Sol:
i) Titandioxidkristallite mit einer mittleren Partikelgröße von kleiner als 50 nm, von denen wenigstens 90 % in der Anatas-Form vorliegen, umfasst; oder
ii) mit einem Metall dotiert ist, wobei das Metall ausgewählt ist aus der Gruppe bestehend aus Ag, Zn, Mg, Sn, Fe, Co, Ni, Se, Ce, Cu und Kombinationen davon; oder
iii) mit entmineralisiertem Wasser gewaschen wird, so dass in dem erhaltenen gewaschenen neutralen, stabilen und transparenten photokatalytischen Titandioxid-Sol die Konzentration von Calciumionen kleiner als 71 ppm ist und die Konzentration von Natriumionen kleiner als 13 ppm ist, und wobei die Filtratleitfähigkeit gleich oder kleiner als 500 µS ist, wobei gegebenenfalls die Viskosität des gewaschenen neutralen, stabilen und transparenten photokatalytischen Titandioxid-Sols nach wenigstens 4 Wochen bei Raumtemperatur kleiner als 100 Centipoise ist.

6. Verfahren zur Herstellung eines neutralen, stabilen und transparenten photokatalytischen Titandioxid-Sols, umfassend:
(1) Präzipitieren von wasserhaltigem Titandioxid aus einer Lösung, die eine titanhaltige Verbindung enthält, um Titandioxidpartikel zu bilden;
(2) Bilden einer Dispersion der Titandioxidpartikel in einem flüssigen Medium;
(3) Behandeln der Dispersion mit einem alkalischen Peptisiermittel, um ein peptisiertes alkalisches Titandioxid-Sol zu erhalten;
(4) Neutralisieren des peptisierten alkalischen Titandioxid-Sols mit Phosphorsäure, um ein neutrales, stabiles und transparentes photokatalytisches Titandioxid-Sol zu erhalten;
wobei der End-pH-Wert des erhaltenen neutralisierten Sols so gesteuert wird, dass er in einem Bereich von 8 bis 9 liegt.

7. Verfahren gemäß Anspruch 6, wobei die titanhaltige Verbindung ist:
i) ausgewählt aus der Gruppe bestehend aus Titanalkoxid, Titanoxychlorid, Titansulfat, Titanoxynitrat, Titanylacetylacetonat und Kombinationen davon, wobei die titanhaltige Verbindung gegebenenfalls Titansulfat ist, ferner umfassend den Schritt des Behandelns einer Lösung des Titansulfats mit einem Ionenaustauschharz, um die Lösung vor der Verwendung der Lösung des Titansulfats bei dem Schritt des Präzipitierens des wasserhaltigen Titandioxids zu entionisieren; oder
ii) vor dem Präzipitieren des wasserhaltigen Titandioxids mit einem basischen Chelatbildner behandelt, wobei der basische Chelatbildner ausgewählt ist aus der Gruppe bestehend aus Dialkanolamin, Trialkanolamin und Kombinationen davon.

8. Verfahren gemäß Anspruch 6, wobei das alkalische Peptisiermittel ist:
i) ein Mono-, Di- oder Trialkylamin, wobei das Mono-, Di- oder Trialkylamin gegebenenfalls ausgewählt ist aus der Gruppe bestehend aus tert-Butylamin, Triethylamin, Diethylamin, Isopropylamin, Diisopropylethylamin, Isobutylamin, Isoamylamin und Kombinationen davon; oder
ii) ein quaternäres Ammoniumhydroxid, wobei das quaternäre Ammoniumhydroxid gegebenenfalls ein Tetraalkylammoniumhydroxid ist.

9. Verfahren gemäß Anspruch 6, wobei das neutrale, stabile und transparente photokatalytische Titandioxid-Sol Titandioxidkristallite mit einer mittleren Partikelgröße von kleiner als 10 nm, von denen wenigstens 90 % in der Anatas-Form vorliegen, umfasst.

10. Verfahren gemäß Anspruch 1 oder 6, wobei der Schritt des Neutralisierens des peptisierten alkalischen Titandioxid-Sols mit Phosphorsäure und Essigsäure durchgeführt wird.

## Revendications

1. Procédé pour la préparation d'un sol de dioxyde de titane photocatalytique neutre, stable et transparent, comprenant les étapes de :
(1) mise en réaction d'un gel de dioxyde de titane hydraté avec un agent peptisant alcalin pour fournir un sol de dioxyde de titane alcalin peptisé ;
(2) neutralisation du sol de dioxyde de titane alcalin peptisé avec de l'acide phosphorique pour obtenir un sol de dioxyde de titane photocatalytique neutre, stable et transparent ;
la valeur finale du pH du sol neutralisé résultant étant régulée de sorte à être dans une plage de 8 à 9.

2. Procédé selon la revendication 1, l'agent peptisant alcalin étant choisi dans le groupe constitué par une alkylamine, un hydroxyde d'ammonium quaternaire et des combinaisons correspondantes, par exemple :
i) l'alkylamine étant la diéthylamine ; ou
ii) l'hydroxyde d'ammonium quaternaire étant l'hydroxyde de tétraméthylammonium.

3. Procédé selon la revendication 2, l'agent peptisant alcalin étant présent dans le sol de dioxyde de titane photocatalytique neutre, stable et transparent en une quantité d'au moins 7 % en poids, sur la base du poids combiné de l'agent peptisant alcalin et du dioxyde de titane, le sol de dioxyde de titane alcalin peptisé étant neutralisé avec de l'acide phosphorique, éventuellement :
i) le sol de dioxyde de titane photocatalytique neutre, stable et transparent comprenant dans la plage allant de 0,5 à 20 % en poids de dioxyde de titane ; ou
ii) le sol de dioxyde de titane photocatalytique neutre, stable et transparent comprenant dans la plage allant de 30 à 40 % en poids de dioxyde de titane.

4. Procédé selon la revendication 2, l'agent peptisant alcalin étant présent dans le sol de dioxyde de titane photocatalytique neutre, stable et transparent en une quantité d'au moins 18 % en poids, sur la base du poids combiné de l'agent peptisant alcalin et du dioxyde de titane, par exemple le sol de dioxyde de titane alcalin peptisé étant neutralisé avec une combinaison d'acide phosphorique et d'acide acétique ; le rapport pondéral de l'acide phosphorique sur l'acide acétique étant dans la plage allant de 0,8 :1 à 1,2 :1, et l'acide phosphorique et l'acide acétique étant ajoutés simultanément au sol de dioxyde de titane alcalin peptisé, éventuellement :
i) le sol de dioxyde de titane photocatalytique neutre, stable et transparent comprenant dans la plage allant de 0,5 à 20 % en poids de dioxyde de titane ; ou
ii) le sol de dioxyde de titane photocatalytique neutre, stable et transparent comprenant dans la plage allant de 30 à 40 % en poids de dioxyde de titane.

5. Procédé selon la revendication 1, le sol de dioxyde de titane photocatalytique neutre, stable et transparent :
i) comprenant des cristallites de dioxyde de titane possédant une grosseur moyenne de particule inférieure à 50 nm, au moins 90 % desquelles étant sous la forme d'anatase ; ou
ii) étant dopé avec un métal, le métal étant choisi dans le groupe constitué par Ag, Zn, Mg, Sn, Fe, Co, Ni, Se, Ce, Cu et des combinaisons correspondantes ; ou
iii) étant lavé avec de l'eau déminéralisée de sorte que la concentration en ions calcium soit inférieure à 71 ppm et que la concentration en ions sodium soit inférieure à 13 ppm dans le sol de dioxyde de titane photocatalytique neutre, stable et transparent lavé résultant, et la conductivité du filtrat étant égale ou inférieure à 500 µS, éventuellement la viscosité du sol de dioxyde de titane photocatalytique neutre, stable et transparent lavé étant inférieure à 100 centipoises après au moins 4 semaines à température ambiante.

6. Procédé pour la préparation d'un sol de dioxyde de titane photocatalytique neutre, stable et transparent, comprenant :
(1) la précipitation de dioxyde de titane hydraté à partir d'une solution possédant un composé contenant du titane pour former des particules de dioxyde de titane ;
(2) la formation d'une dispersion des particules de dioxyde de titane dans un milieu liquide ;
(3) le traitement de la dispersion avec un agent peptisant alcalin pour obtenir un sol de dioxyde de titane alcalin peptisé ;
(4) la neutralisation du sol de dioxyde de titane alcalin peptisé avec de l'acide phosphorique pour obtenir un sol de dioxyde de titane photocatalytique neutre, stable et transparent ;
la valeur finale du pH du sol neutralisé résultant étant régulée de sorte à être dans une plage de 8 à 9.

7. Procédé selon la revendication 6, le composé contenant du titane étant :
i) choisi dans le groupe constitué par un alcoxyde de titane, l'oxychlorure de titane, le sulfate de titane, l'oxynitrate de titane, l'acétylacétonate de titanyle, et des combinaisons correspondantes, éventuellement le composé contenant du titane étant le sulfate de titane et comprenant en outre l'étape de traitement d'une solution du sulfate de titane avec une résine échangeuse d'ions pour désioniser la solution avant l'utilisation de la solution du sulfate de titane dans l'étape de précipitation du dioxyde de titane hydraté ; ou
ii) traité avec un agent chélatant basique avant la précipitation du dioxyde de titane hydraté, l'agent chélatant basique étant choisi dans le groupe constitué par une dialcanolamine, une trialcanolamine et des combinaisons correspondantes.

8. Procédé selon la revendication 6, l'agent peptisant alcalin étant :
i) une monoalkylamine, une dialkylamine, ou une trialkylamine, éventuellement la monoalkylamine, la dialkylamine, ou la trialkylamine étant choisie dans le groupe constitué par la tert-butylamine, la triéthylamine, la diéthylamine, l'isopropylamine, la diisopropyléthylamine, l'isobutylamine, l'isoamylamine et des combinaisons correspondantes ; ou
ii) un hydroxyde d'ammonium quaternaire, éventuellement l'hydroxyde d'ammonium quaternaire étant un hydroxyde de tétraalkylammonium.

9. Procédé selon la revendication 6, le sol de dioxyde de titane photocatalytique neutre, stable et transparent comprenant des cristallites de dioxyde de titane possédant une grosseur moyenne de particule inférieure à 10 nm, au moins 90 % desquelles étant sous la forme d'anatase.

10. Procédé selon la revendication 1 ou 6, l'étape de neutralisation du sol de dioxyde de titane alcalin peptisé étant mise en œuvre avec de l'acide phosphorique et de l'acide acétique.
